(19) 

Europäisches
Patentamt
European
Patent Office
Office européen
des brevets

(11) **EP 4 751 912 A1**

(12) **EUROPEAN PATENT APPLICATION**
published in accordance with Art. 153(4) EPC

(43) Date of publication:
**03.06.2026 Bulletin 2026/23**

(21) Application number: **24872458.5**

(22) Date of filing: **26.09.2024**

(51) International Patent Classification (IPC):
***B32B 27/32*** *(2006.01)*     ***B32B 27/00*** *(2006.01)*
***B65D 65/40*** *(2006.01)*     ***C08J 7/043*** *(2020.01)*

(52) Cooperative Patent Classification (CPC):
**B32B 27/00; B32B 27/32; B65D 33/00;**
**B65D 65/40; C08J 7/043; C08L 23/06; C08L 23/16**

(86) International application number:
**PCT/JP2024/034543**

(87) International publication number:
**WO 2025/070674 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **27.09.2023   JP 2023166474**
          **28.09.2023   JP 2023167754**

(71) Applicant: **Dai Nippon Printing Co., Ltd.**
**Tokyo 162-8001 (JP)**

(72) Inventors:
• **HASEGAWA, Takayuki**
  **Tokyo 162-8001 (JP)**
• **ISHIKAWA, Shun**
  **Tokyo 162-8001 (JP)**

• **KONO, Shinichiro**
  **Tokyo 162-8001 (JP)**
• **TAKUSHIMA, Kazuhiro**
  **Tokyo 162-8001 (JP)**
• **NAKATA, Mariko**
  **Tokyo 162-8001 (JP)**
• **SHIMIZU, Reiko**
  **Tokyo 162-8001 (JP)**
• **MORIMOTO, Taro**
  **Tokyo 162-8001 (JP)**
• **KOICHI, Chisayo**
  **Tokyo 162-8001 (JP)**
• **ONO, Yoshiyuki**
  **Tokyo 162-8001 (JP)**

(74) Representative: **Müller-Boré & Partner**
**Patentanwälte PartG mbB**
**Friedenheimer Brücke 21**
**80639 München (DE)**

(54) **MULTILAYER BODY, PACKAGING BAG, AND HEAT STERILIZATION POUCH**

(57)     To provide a laminate having high impact resistance after retort treatment when used for a packaging bag, such as a retort pouch. A laminate including: a second substrate; a second adhesive layer; and a sealant layer in this order in a thickness direction, wherein the laminate includes only one substrate, the second substrate has a multilayer structure including a first surface resin layer, a polypropylene layer, and a second surface resin layer in this order in a thickness direction and is disposed such that the second surface resin layer faces the second adhesive layer, the second surface resin layer contains a random copolymer of propylene and an $\alpha$-olefin other than propylene in an amount of 50% by mass or more based on a total amount of the second surface resin layer, the second adhesive layer has a thickness of 1 $\mu$m or more and 4.5 $\mu$m or less and a modulus of elasticity of 20 MPa or more and 50 MPa or less, and the sealant layer is an unstretched polypropylene film and has a composite modulus of elasticity of 900 MPa or less.

*Fig. 1*

**Description**

Cross-Reference to Related Applications

The present application claims the benefit of priority of Japanese Patent Application No. 2023-166474 filed on September 27, 2023 and Japanese Patent Application No. 2023-167754 filed on September 28, 2023, the entire contents of which are incorporated herein by reference.

Technical Field

The present invention relates to a laminate, a packaging bag, and a heat-sterilized pouch.

Background Art

A packaging bag has been composed of a laminate in which a polyester film having high strength and heat resistance, a nylon film having high impact resistance, or the like is used as a substrate, and a polyolefin film having high heat sealability is used as a sealant film. However, although a packaging bag having high recyclability has been required with the recent increase in demand for the construction of a recycling-oriented society, it has been difficult to separate each resin material in known packaging bags composed of different types of resin materials.

Thus, from the perspective of single material formation (monomaterialization) that is easy to recycle, single material formation using polyolefin has been studied (for example, Patent Literature 1). Patent Literature 1 discloses a laminate used for a packaging material of a packaging bag in which a stretched substrate containing polypropylene is used as a substrate in place of a polyester film or a nylon film and is combined with a sealant film containing polypropylene. This laminate, in which both the substrate and the sealant film are composed of polypropylene, has improved recyclability.

Citation List

Patent Literature

PTL 1: Japanese Unexamined Patent Application Publication No. 2021-020391

Summary of Invention

Technical Problem

Incidentally, for a packaging bag, such as a retort pouch, a laminate used for the packaging bag is required to have drop impact resistance (impact resistance) to withstand the impact when the pouch is dropped after heat sterilization treatment (retort treatment). However, the fact is that studies for satisfying these required characteristics are not sufficient in a laminate made of a single material of polypropylene.

An object of the present disclosure is to provide a laminate having high impact resistance after retort treatment when used for a packaging bag, such as a retort pouch.

Solution to Problem

A laminate according to the present disclosure includes a second substrate, a second adhesive layer, and a sealant layer in this order in a thickness direction, wherein the laminate includes only one substrate, the second substrate has a multilayer structure including a first surface resin layer, a polypropylene layer, and a second surface resin layer in this order in a thickness direction and is disposed such that the second surface resin layer faces the second adhesive layer, the second surface resin layer contains a random copolymer of propylene and an $\alpha$-olefin other than propylene in an amount of 50% by mass or more based on a total amount of the second surface resin layer, the second adhesive layer has a thickness of 1 $\mu$m or more and 4.5 $\mu$m or less and a modulus of elasticity of 20 MPa or more and 50 MPa or less, and the sealant layer is an unstretched polypropylene film and has a composite modulus of elasticity of 900 MPa or less.

Advantageous Effects of Invention

The present disclosure can provide a laminate having high impact resistance after retort treatment when used for a packaging bag, such as a retort pouch.

Brief Description of Drawings

[Fig. 1] Fig. 1 is a schematic cross-sectional view of an embodiment of a laminate.
[Fig. 2] Fig. 2 is a schematic cross-sectional view of an embodiment of a laminate.
[Fig. 3] Fig. 3 is a schematic cross-sectional view of an embodiment of a laminate.
[Fig. 4] Fig. 4 is a schematic cross-sectional view of an embodiment of a laminate.
[Fig. 5] Fig. 5 is a schematic cross-sectional view of an embodiment of a laminate.
[Fig. 6] Fig. 6 is a schematic cross-sectional view of an embodiment of a laminate.
[Fig. 7] Fig. 7 is a front view of one embodiment of a packaging bag.
[Fig. 8] Fig. 8 is a front view of one embodiment of a packaging bag.
[Fig. 9] Fig. 9 is a schematic view of a method for measuring laminate strength.
[Fig. 10] Fig. 10 is a graph showing the measurement results of laminate strength.

Description of Embodiments

In the present description, when a plurality of upper limit candidates and a plurality of lower limit candidates are described for a certain parameter, any one upper limit candidate and any one lower limit candidate may be combined to configure the numerical range of the parameter. For example, an explanation will be given to the phrase "The parameter B is preferably A1 or more, more preferably A2 or more, still more preferably A3 or more, and is preferably A4 or less, more preferably A5 or less, still more preferably A6 or less." In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

Embodiments of the present disclosure will be described in detail below. The present disclosure may be embodied in many different forms and should not be construed as being limited to the description of the embodiments exemplified below. In the drawings, to make the description clearer, the width, thickness, shape, and the like of each layer may be schematically illustrated compared to the embodiments; however, these are merely examples and do not limit the interpretation of the present disclosure. In the present description and each drawing, the same reference numerals and letters are given to the same elements as those already described with reference to the preceding drawings, and detailed description thereof may be omitted as appropriate.

As used herein, the term "main component" in a given layer or substrate refers to a component that constitutes more than 50% by mass, preferably 60% by mass or more, more preferably 70% by mass or more, still more preferably 80% by mass or more, of the layer or substrate.

In the following description, each component (for example, polypropylene, $\alpha$-olefin, a resin material, an additive agent, a gas barrier resin, an adhesive resin, and an inorganic oxide) may be used alone or in combination of two or more types thereof.

[Laminate]

A laminate according to the present disclosure includes a substrate (second substrate), an adhesive layer (second adhesive layer), and a sealant layer in this order in a thickness direction (hereinafter also referred to simply as "in this order").

The laminate has only one substrate.

The substrate is a polypropylene stretched substrate. The term "polypropylene stretched substrate", as used herein, refers to a stretched substrate containing polypropylene as a main component. The polypropylene stretched substrate has a multilayer structure including a first surface resin layer, a polypropylene layer, and a second surface resin layer in this order in the thickness direction.

The sealant layer is an unstretched polypropylene film. The unstretched polypropylene film contains polypropylene as a main component.

A laminate according to the present disclosure may include at least one barrier layer.

The barrier layer is a layer having gas barrier properties (for example, oxygen barrier properties and water vapor barrier properties, particularly oxygen barrier properties) (a surface coating layer, an inorganic oxide layer, a covering layer, a surface resin layer, or the like described later).

In a laminate according to the present disclosure, the substrate may be a barrier substrate (also referred to as a "barrier film") including at least one barrier layer.

A laminate according to the present disclosure may include only one substrate or two or more substrates.

A laminate according to the present disclosure may include only one adhesive layer or two or more adhesive layers.

A laminate according to the present disclosure preferably includes a first substrate, a first adhesive layer, a second substrate, a second adhesive layer, and a sealant layer in this order.

The first substrate is a polypropylene stretched substrate containing polypropylene as a main component.

The second substrate is a polypropylene stretched substrate containing polypropylene as a main component.

The polypropylene stretched substrate of the second substrate has a multilayer structure including a first surface resin layer, a polypropylene layer, and a second surface resin layer in this order in the thickness direction.

The polypropylene stretched substrate of the first substrate and the polypropylene stretched substrate of the second substrate may be the same or different.

A laminate according to the present disclosure may include one or more barrier layers.

In a laminate according to the present disclosure, the first substrate may be a barrier substrate including at least one barrier layer, or the second substrate may be a barrier substrate including at least one barrier layer.

In one embodiment of a laminate according to the present disclosure, the first substrate is a polypropylene stretched substrate, and the second substrate is a barrier substrate. That is, the laminate includes a polypropylene stretched substrate, an optional print layer, a first adhesive layer, a barrier substrate, a second adhesive layer, and a sealant layer in this order.

In this embodiment, the barrier substrate may be disposed such that the barrier layer faces the first adhesive layer and the polypropylene stretched substrate faces the second adhesive layer. Such an arrangement can strongly bond the second surface resin layer constituting the polypropylene stretched substrate of the second substrate (barrier substrate) and the second adhesive layer together and improve the adhesion strength between the barrier substrate and the sealant layer. In the present embodiment, the laminate exhibits high interlayer adhesiveness. A packaging bag produced using the laminate of the present embodiment exhibits high drop impact resistance (impact resistance) and hand tearability (openability) even after heat treatment, such as retort treatment or boiling treatment.

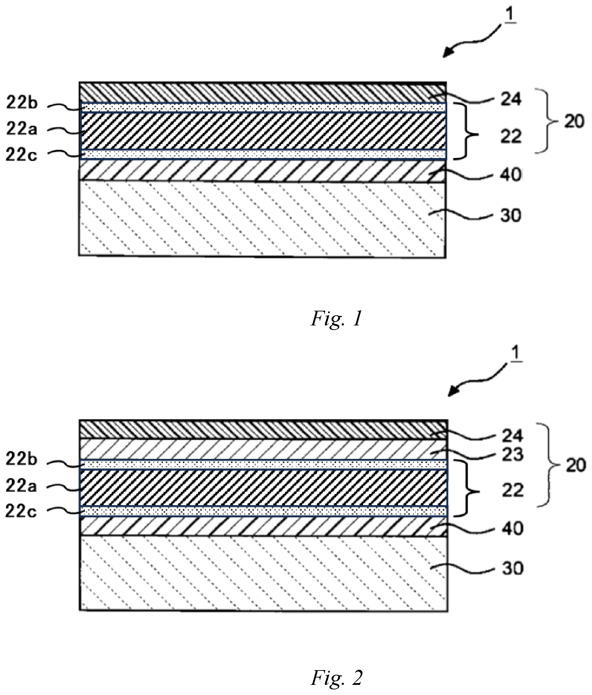

Figs. 1 to 6 are schematic cross-sectional views illustrating one embodiment of a laminate according to the present disclosure.

Laminates 1 illustrated in Figs. 1 to 3 are examples of the two-layer structure.

The laminate 1 illustrated in Fig. 1 includes a barrier substrate 20 as a substrate, an adhesive layer 40, and a sealant layer 30 in this order. The barrier substrate 20 includes a polypropylene stretched substrate 22 and an inorganic oxide layer 24 as a barrier layer. In this example, the barrier substrate 20 is disposed such that the polypropylene stretched substrate 22 faces the adhesive layer 40 and the inorganic oxide layer 24 is the outermost layer of the laminate 1.

The polypropylene stretched substrate 22 has a multilayer structure including a first surface layer 22b, a polypropylene layer 22a, and a second surface layer 22c in this order. In this example, the polypropylene stretched substrate 22 is disposed such that the first surface layer 22b faces the inorganic oxide layer 24 and the second surface layer 22c faces the adhesive layer 40.

Fig. 2 is the same as Fig. 1 except that the barrier substrate 20 includes a surface coating layer 23 between the polypropylene stretched substrate 22 and the inorganic oxide layer 24. In this example, the polypropylene stretched substrate 22 is disposed such that the first surface layer 22b faces the surface coating layer 23 and the second surface layer 22c faces the adhesive layer 40.

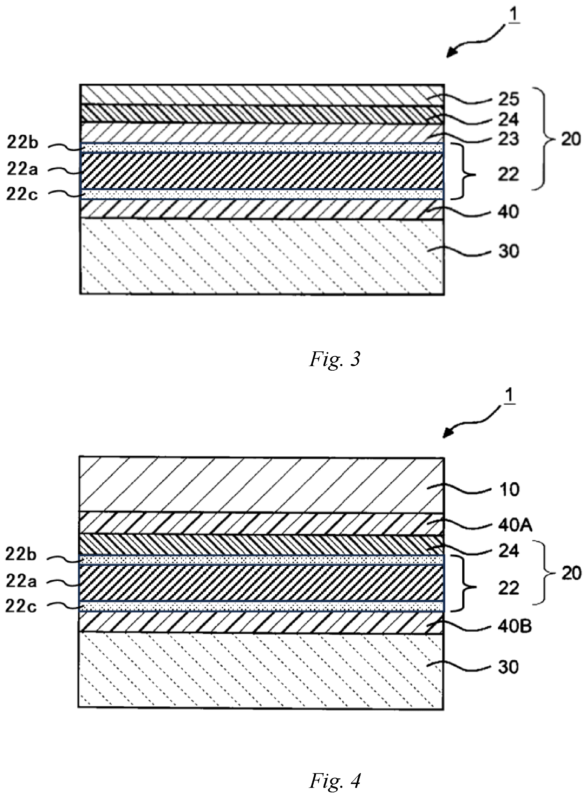

Fig. 3 is the same as Fig. 2 except that the barrier substrate 20 includes the polypropylene stretched substrate 22, the surface coating layer 23, the inorganic oxide layer 24, and a covering layer 25 in this order.

Laminates 1 illustrated in Figs. 4 to 6 are examples of the three-layer structure.

A laminate 1 illustrated in Fig. 4 includes a polypropylene stretched substrate 10 as a first substrate, a first adhesive layer 40A, the barrier substrate 20 as a second substrate, a second adhesive layer 40B, and the sealant layer 30 in this order. The barrier substrate 20 includes a polypropylene stretched substrate 22 and an inorganic oxide layer 24. In this example, the barrier substrate 20 is disposed such that the polypropylene stretched substrate 22 faces the second adhesive layer 40B and the inorganic oxide layer 24 faces the first adhesive layer 40A.

The polypropylene stretched substrate 22 has a multilayer structure including the first surface layer 22b, the polypropylene layer 22a, and the second surface layer 22c in this order. In this example, the polypropylene stretched substrate 22 is disposed such that the first surface layer 22b faces the inorganic oxide layer 24 and the second surface layer 22c faces the second adhesive layer 40B.

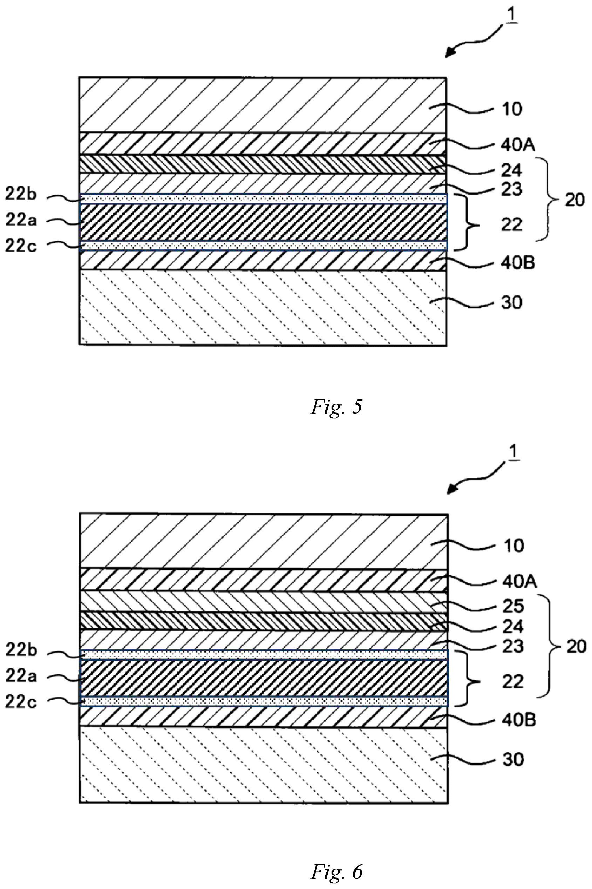

Fig. 5 is the same as Fig. 4 except that the barrier substrate 20 includes the surface coating layer 23 between the polypropylene stretched substrate 22 and the inorganic oxide layer 24. In this example, the polypropylene stretched substrate 22 is disposed such that the first surface layer 22b faces the surface coating layer 23 and the second surface layer 22c faces the second adhesive layer 40B.

Fig. 6 is the same as Fig. 5 except that the barrier substrate 20 includes the polypropylene stretched substrate 22, the surface coating layer 23, the inorganic oxide layer 24, and the covering layer 25 in this order.

The polypropylene content relative to the total resin material content of a laminate according to the present disclosure (hereinafter also referred to as a "monomaterialization rate") is preferably 80% by mass or more, more preferably 85% by mass or more, still more preferably 88% by mass or more, particularly preferably 90% by mass or more. A packaging bag produced using such a laminate has, for example, high recyclability. The upper limit of the polypropylene content relative to the total resin material content of a laminate according to the present disclosure may be, for example, but is not limited to, 99% by mass, 98% by mass, 97% by mass, 96% by mass, 95% by mass, or 94% by mass.

The term "monomaterialization rate", as used herein, refers to the ratio of the mass of a polypropylene-based single material to the total mass of resin material contained in the laminate. When a layer contains polypropylene as a main component (that is, more than 50% by mass), the monomaterialization rate is calculated on the assumption that the polypropylene constitutes 100% by mass of the layer.

<Barrier Substrate>

The barrier substrate includes a polypropylene stretched substrate and one or more barrier layers. The barrier layer may be a surface coating layer, an inorganic oxide layer, a covering layer, or a surface resin layer.

The barrier substrate includes, for example, a polypropylene stretched substrate and an inorganic oxide layer provided on one surface of the stretched substrate. The barrier substrate may include a surface coating layer between the polypropylene stretched substrate and the inorganic oxide layer. The barrier substrate may include a covering layer on the inorganic oxide layer. The barrier substrate may be transparent.

(Polypropylene Stretched Substrate)

The polypropylene stretched substrate included in the barrier substrate is, for example, a polypropylene stretched substrate with a multilayer structure including a first surface resin layer, an optional adhesive resin layer, a polypropylene layer, an optional adhesive resin layer, and a second surface resin layer in this order. In this embodiment, the barrier substrate includes a polypropylene stretched substrate and an inorganic oxide layer provided on a surface resin layer of the polypropylene stretched substrate. In this embodiment, the barrier substrate includes a second surface resin layer, an optional adhesive resin layer, a polypropylene layer, an optional adhesive resin layer, a first surface resin layer, and an inorganic oxide layer in this order.

"Polypropylene Layer"

In a polypropylene stretched substrate, the polypropylene layer contains polypropylene as a main component.

The polypropylene may be any of a homopolymer, a random copolymer, and a block copolymer, or may be a mixture of two or more selected from these. The polypropylene may be biomass-derived polypropylene and/or recycled polypropylene. The propylene homopolymer is a polymer composed only of propylene. The propylene random copolymer is a random copolymer of propylene and an $\alpha$-olefin or the like other than propylene. The propylene block copolymer is a copolymer having a polymer block composed of propylene and a polymer block composed of at least an $\alpha$-olefin or the like other than propylene. The polymer block composed of at least an $\alpha$-olefin or the like other than propylene may be a polymer block composed of propylene and an $\alpha$-olefin other than propylene.

The $\alpha$-olefin is, for example, an $\alpha$-olefin with 2 or more and 20 or less carbon atoms other than propylene. More specifically, the $\alpha$-olefin may be ethylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Among polypropylenes, a random copolymer is preferred from the perspective of transparency, a homopolymer is preferred when the rigidity and heat resistance of a packaging bag are regarded as important, and a block copolymer is preferred when the impact resistance of a packaging bag is regarded as important. In the present disclosure, among these propylenes, from the perspective of heat resistance, impact resistance, and easy openability, a homopolymer and a block copolymer are more preferred, and a homopolymer (propylene homopolymer) is still more preferred.

From the perspective of film formability and processability, the melt flow rate (MFR) of the polypropylene is preferably 0.1 g/10 minutes or more, more preferably 0.3 g/10 minutes or more, and is preferably 50 g/10 minutes or less, more preferably 30 g/10 minutes or less, for example, 0.1 g/10 minutes or more and 50 g/10 minutes or less. The MFR of the polypropylene is measured under conditions of a temperature of 230°C and a load of 2.16 kg in accordance with JIS K 7210-1: 2014, Method A.

The polypropylene content of the polypropylene layer is preferably more than 50% by mass, more preferably 60% by mass or more, still more preferably 70% by mass or more, still more preferably 80% by mass or more, particularly preferably 85% by mass or more, 90% by mass or more, or 95% by mass or more.

The polypropylene layer may contain a resin material other than polypropylene. The resin material is, for example, a polyolefin other than polypropylene, an acrylic resin, a vinyl resin, a cellulose resin, a polyamide, a polyester, or an ionomer resin. The polyolefin other than polypropylene may be polyethylene or the like.

The polypropylene layer may contain an additive agent. The additive agent is, for example, a cross-linker, an antioxidant, an anti-blocking agent, a lubricant, an ultraviolet absorber, a light stabilizer, a filler, a reinforcing agent, an antistatic agent, a pigment, or a modifying resin.

The polypropylene layer may have a monolayer structure or a multilayer structure.

The polypropylene layer preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less. A laminate including a stretched substrate including a polypropylene layer with a thickness equal to or higher than the lower limit has, for example, high strength and heat resistance. A laminate including a stretched substrate including a polypropylene layer with a thickness equal to or lower than the upper limit has, for example, high processability.

In the present description, the thickness of the substrate and each layer is measured as described below. A block in which a laminate is embedded in an embedding resin is prepared and is cut with a commercially available rotary microtome in a room temperature (25°C) environment to prepare a cross section of the laminate. The cross section is prepared by cutting in the thickness direction perpendicular to the main surface of the laminate. Finishing is performed with a diamond knife. The thickness of the substrate and each layer is calculated as an arithmetic mean of measurements taken at five points on the cross section observed with a scanning electron microscope (SEM, SU8000, manufactured by Hitachi, Ltd.).

"Second Surface Resin Layer"

The second surface resin layer is located between the adhesive layer or the second adhesive layer on the sealant layer and the polypropylene layer.

The second surface resin layer contains a random copolymer of propylene and an $\alpha$-olefin other than propylene. The second surface resin layer containing the random copolymer between the polypropylene layer and the adhesive layer or the second adhesive layer can improve the adhesion strength between the sealant layer and the polypropylene stretched substrate (that is, barrier substrate) and also improve the impact resistance of the laminate.

The random copolymer is, for example, a propylene-ethylene random copolymer or a propylene-ethylene-butene random copolymer. Among these, any one type or a mixture of two or more types can be used as the random copolymer.

In the propylene-ethylene random copolymer, the content of the constitutional unit derived from ethylene is preferably 2% by mass or more, more preferably 4% by mass or more. The content is preferably 50% by mass or less, more preferably 40% by mass or less. A content in the above preferred range can result in, for example, further improved drop impact resistance. In the present disclosure, the constitutional unit content can be measured, for example, by a thermal gradient interaction chromatography (TGIC) method.

In the propylene-ethylene-butene random copolymer, the content of the constitutional unit derived from ethylene and the constitutional unit derived from butene is preferably 2% by mass or more, more preferably 4% by mass or more. This content is preferably 50% by mass or less, more preferably 40% by mass or less.

The random copolymer content of the second surface resin layer is 50% by mass or more, preferably 70% by mass or more, more preferably 80% by mass or more, still more preferably 90% by mass or more, based on the total amount of the second surface resin layer. When the random copolymer content is 50% by mass or more, the second surface resin layer exhibits sufficient adhesion strength.

The second surface resin layer may contain the polypropylene other than the random copolymer, or the resin material.

The second surface resin layer may contain the additive agent.

The second surface resin layer may be subjected to the surface treatment described above.

The ratio of the thickness of the second surface resin layer to the total thickness of the polypropylene stretched substrate is preferably 1% or more, more preferably 1.5% or more, and is preferably 20% or less, more preferably 10% or less, for example, 1% or more and 20% or less. The second surface resin layer preferably has a thickness of 0.2 $\mu$m or more, more preferably 0.3 $\mu$m or more, and preferably 4 $\mu$m or less, more preferably 2 $\mu$m or less, for example, 0.2 $\mu$m or more and 4 $\mu$m or less. A ratio or a thickness equal to or higher than the lower limit can result in, for example, improved adhesion to an adhesive layer (second adhesive layer) and result in a laminate having improved laminate strength. A ratio or a thickness equal to or lower than the upper limit can result in, for example, a polypropylene stretched substrate having improved film formability and processability and a laminate having improved recyclability.

"First Surface Resin Layer"

The first surface resin layer is located between the inorganic oxide layer and the polypropylene layer.

In one embodiment, the first surface resin layer may have the same configuration as the second surface resin layer.

In one embodiment, the first surface resin layer contains a resin material with a melting point of 180°C or more (hereinafter also referred to as a "high-melting-point resin material"). A first surface resin layer containing a high-melting-point resin material can be provided between the polypropylene layer and the inorganic oxide layer, for example, to improve the adhesiveness of the inorganic oxide layer formed on the first surface resin layer and suppress the deterioration of the gas barrier properties.

In one embodiment, the first surface resin layer may be provided on the polypropylene layer. That is, the first surface resin layer may be adjacent to the polypropylene layer.

In one embodiment, when an adhesive resin layer is provided between the polypropylene layer and the first surface resin layer, the adhesive resin layer may be provided on the polypropylene layer, and the first surface resin layer may be provided on the adhesive resin layer. That is, the adhesive resin layer may be adjacent to the polypropylene layer, and the first surface resin layer may be adjacent to the adhesive resin layer.

The high-melting-point resin material preferably has a melting point of 185°C or more, more preferably 190°C or more, still more preferably 205°C or more. A melting point equal to or higher than the lower limit can result in, for example, an inorganic oxide layer having improved adhesiveness, improved gas barrier properties, and a laminate having improved laminate strength. The high-melting-point resin material preferably has a melting point of 265°C or less, more preferably 260°C or less, still more preferably 250°C or less. This can improve, for example, the film formability of the polypropylene stretched substrate.

In the present description, the melting point of a high-melting-point resin material or the like is measured in accordance with JIS K 7121: 2012 (Testing methods for transition temperatures of plastics). More specifically, a melting peak temperature as a melting point is determined by measuring a DSC curve at a heating rate of 10°C/min using a differential scanning calorimetry (DSC) apparatus.

It is preferable that the high-melting-point resin material in the first surface resin layer have a melting point TA, the polypropylene in the polypropylene layer have a melting point TB, and the difference between the melting point TA and the melting point TB be 20°C or more. The difference between the melting point TA and the melting point TB is preferably 80°C or less, more preferably 60°C or less.

A difference between the melting point TA and the melting point TB equal to or higher than the lower limit can result in further improved adhesion between the first surface resin layer and the inorganic oxide layer and further improved gas barrier properties. This can also further improve the laminate strength of a packaging bag.

A difference between the melting point TA and the melting point TB equal to or lower than the upper limit can result in a polypropylene stretched substrate having further improved film formability.

The high-melting-point resin material preferably has a polar group. The polar group refers to a group with one or more heteroatoms and is, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a hydroxy group, an ester group, an amino group, an amide group, a carboxy group, and a carbonyl group are preferred, and an amide group is more preferred.

The high-melting-point resin material only needs to have a melting point of 180°C or more and is, for example, a polyolefin, a vinyl resin, an acrylic resin, a polyamide, a polyimide, a polyester, a cellulose resin, or an ionomer resin. For example, a resin material with a melting point of 180°C or more and with a polar group is preferred, and an ethylene-vinyl alcohol copolymer, poly(vinyl alcohol), a polyester, or a polyamide, such as nylon 6, nylon 6,6, MXD nylon, or amorphous nylon, is more preferred.

Such a resin material can be used to significantly improve the adhesiveness of the inorganic oxide layer formed on the first surface resin layer and effectively suppress the deterioration of the gas barrier properties.

In one embodiment, the high-melting-point resin material is preferably a polyamide. A polyamide can be used as the high-melting-point resin material to suppress the deterioration of the gas barrier properties even after the laminate is bent and to improve the heat resistance of the laminate. Furthermore, even after the laminate is subjected to retort treatment and boiling treatment described later, the deterioration of the gas barrier properties can be suppressed. The high-melting-point resin material is more preferably nylon 6.

The first surface resin layer preferably has a high-melting-point resin material content of 70% by mass or more, more preferably 80% by mass or more, still more preferably 90% by mass or more.

The first surface resin layer may contain the resin material other than the high-melting-point resin material.

The first surface resin layer may contain the additive agent.

The first surface resin layer may be subjected to the surface treatment described above.

The ratio of the thickness of the first surface resin layer to the total thickness of the polypropylene stretched substrate is preferably 1% or more, more preferably 1.5% or more, and is preferably 10% or less, more preferably 5% or less, for example, 1% or more and 10% or less. The first surface resin layer preferably has a thickness of 0.1 μm or more, more preferably 0.2 μm or more, and preferably 5 μm or less, more preferably 4 μm or less, for example, 0.1 μm or more and 5 μm or less. A ratio or a thickness equal to or higher than the lower limit can result in, for example, an inorganic oxide layer having improved adhesiveness, improved gas barrier properties, and a laminate having improved laminate strength. A ratio or a thickness equal to or lower than the upper limit can result in, for example, a polypropylene stretched substrate having improved film formability and processability and a laminate having improved recyclability.

"Adhesive Resin Layer"

The polypropylene stretched substrate may have an adhesive resin layer between the polypropylene layer and one or both of the first and second surface resin layers. This can improve the adhesion between the layers. The adhesive resin layer has a thickness of, for example, 1 $\mu$m or more and 15 $\mu$m or less. The adhesive resin layer with a thickness equal to or higher than the lower limit can further improve the adhesion between the polypropylene layer and the first and second surface resin layers. The adhesive resin layer with a thickness equal to or lower than the upper limit can improve the processability of the barrier substrate.

The adhesive resin layer can be formed of, for example, an adhesive resin. The adhesive resin is, for example, a polyether, a polyester, a polyurethane, a silicone resin, an epoxy resin, a vinyl resin, a phenolic resin, a polyolefin, or an acid-modified product of a polyolefin. Among these, from the perspective of the recyclability of the laminate, a polyolefin and an acid-modified product thereof are preferred, and polypropylene and an acid-modified product thereof are more preferred. Polypropylene used for the adhesive resin layer may be a commercial product, for example, Admer series manufactured by Mitsui Chemicals, Inc.

In one embodiment, the polypropylene stretched substrate is a coextruded stretched resin film. The coextruded stretched resin film can be produced, for example, by forming a laminated film using a T-die method, an inflation method, or the like, and then stretching the laminated film.

The stretching treatment of the polypropylene stretched substrate may be uniaxial stretching or biaxial stretching.

The stretch ratio of stretching in the MD direction is preferably 2 or more, more preferably 5 or more, and is preferably 15 or less, more preferably 13 or less. The stretch ratio of stretching in the TD direction is preferably 2 or more, more preferably 5 or more, and is preferably 15 or less, more preferably 13 or less. The stretch ratio can be 2 or more to improve the strength and heat resistance of the substrate. From the perspective of the fracture limit of the substrate, the stretch ratio is preferably 15 or less.

The polypropylene stretched substrate is, for example, a biaxially stretched substrate.

The polypropylene stretched substrate preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less. A laminate including the stretched substrate with a thickness equal to or higher than the lower limit has, for example, high strength and heat resistance. A laminate including the stretched substrate with a thickness equal to or lower than the upper limit has, for example, high processability.

(Surface Coating Layer)

The barrier substrate may include a surface coating layer containing a resin material with a polar group between a polypropylene stretched substrate (a first surface resin layer constituting the polypropylene stretched substrate) and an inorganic oxide layer. Such a barrier substrate has high adhesiveness to the inorganic oxide layer and also has good gas barrier properties. Such a barrier substrate includes a polypropylene stretched substrate, a surface coating layer, and an inorganic oxide layer in this order.

The polar group refers to a group with one or more heteroatoms and is, for example, an ester group, an epoxy group, a hydroxy group, an amino group, an amide group, a urethane group, a carboxy group, a carbonyl group, a carboxylic anhydride group, a sulfo group, a thiol group, or a halogen group. Among these, a carboxy group, a carbonyl group, an ester group, a hydroxy group, an amino group, an amide group, and a urethane group are preferred, and a carboxy group, a hydroxy group, an amide group, and a urethane group are more preferred.

The resin material with a polar group is, for example, an ethylene-vinyl alcohol copolymer (EVOH), poly(vinyl alcohol) (PVA), a polyester, a polyethyleneimine, an acrylic resin with a hydroxy group, a polyamide, such as nylon 6, nylon 6,6, a nylon containing an aromatic, or an amorphous nylon, or a polyurethane. Among these, an ethylene-vinyl alcohol copolymer, poly(vinyl alcohol), an acrylic resin with a hydroxy group, a polyamide, and a polyurethane are more preferred.

The surface coating layer can be formed, for example, using an aqueous emulsion or a solvent emulsion. The aqueous emulsion is, for example, a polyamide emulsion, a polyethylene emulsion, or a polyurethane emulsion. The solvent emulsion is, for example, an acrylic resin emulsion or a polyester emulsion.

The content of the resin material with a polar group in the surface coating layer is preferably 70% by mass or more, more preferably 80% by mass or more, still more preferably 90% by mass or more.

The surface coating layer may contain the above resin material other than the resin material with a polar group.

The surface coating layer may contain the additive agent described above.

The ratio of the thickness of the surface coating layer to the total thickness of the polypropylene stretched substrate and the surface coating layer is preferably 0.08% or more, more preferably 0.2% or more, still more preferably 1% or more, and is preferably 20% or less, more preferably 15% or less, still more preferably 10% or less, still more preferably 5% or less, for example, 0.08% or more and 20% or less. The surface coating layer preferably has a thickness of 0.02 $\mu$m or more, more preferably 0.05 $\mu$m or more, still more preferably 0.1 $\mu$m or more, still more preferably 0.2 $\mu$m or more, and preferably 10 $\mu$m or less, more preferably 5 $\mu$m or less, for example, 0.02 $\mu$m or more and 10 $\mu$m or less. A ratio or a thickness equal to or higher than the lower limit can result in, for example, an inorganic oxide layer having improved adhesiveness, improved gas barrier properties, and a laminate having improved laminate strength. A ratio or a thickness equal to or lower than the upper limit can result in, for example, a barrier substrate having improved processability and a laminate having improved recyclability.

For example, a polypropylene stretched substrate and a resin substrate with a surface coating layer can be produced by forming a film of polypropylene or a resin composition containing polypropylene by a T-die method, an inflation method, or the like to produce a polypropylene substrate, stretching the substrate, applying a coating liquid for forming a surface coating layer to the stretched substrate, and drying the coating liquid.

(Inorganic Oxide Layer)

The barrier substrate includes an inorganic oxide layer. The inorganic oxide layer contains one or two or more inorganic oxides and is, for example, a vapor-deposited film of an inorganic oxide. A laminate including the barrier substrate has good gas barrier properties, more specifically, good oxygen barrier properties and water vapor barrier properties. A packaging bag produced using such a laminate can suppress the oxidative degradation of the contents filled in the packaging bag and can reduce the mass loss of the contents. The barrier substrate may include, for example, an inorganic oxide layer on a surface coating layer or may include an inorganic oxide layer on a first surface resin layer.

The inorganic oxide is, for example, aluminum oxide (alumina), silicon oxide (silica), magnesium oxide, calcium oxide, zirconium oxide, titanium oxide, boron oxide, hafnium oxide, barium oxide, or silicon oxycarbide (carbon-containing silicon oxide). Among these, silica, silicon oxycarbide, and alumina are preferred.

In one embodiment, the inorganic oxide is more preferably silica because aging treatment after the formation of the inorganic oxide layer is not required. In one embodiment, the inorganic oxide is more preferably carbon-containing silicon oxide because the deterioration of the gas barrier properties can be suppressed even when the laminate is bent.

The inorganic oxide layer preferably has a thickness of 1 nm or more, more preferably 5 nm or more, still more preferably 10 nm or more, and preferably 150 nm or less, more preferably 60 nm or less, still more preferably 40 nm or less, for example, 1 nm or more and 150 nm or less. A laminate including an inorganic oxide layer with a thickness equal to or higher than the lower limit has, for example, good oxygen barrier properties and water vapor barrier properties. For example, a laminate including an inorganic oxide layer with a thickness equal to or lower than the upper limit can suppress the occurrence of a crack in the inorganic oxide layer and has high recyclability.

The surface of the inorganic oxide layer may be subjected to the surface treatment described above.

A method for forming an inorganic oxide layer, particularly an inorganic oxide deposited film, is, for example, a physical vapor deposition method (PVD method), such as a vacuum deposition method, a sputtering method, or an ion plating method, or a chemical vapor deposition method (CVD method), such as a plasma chemical vapor deposition method, a thermal chemical vapor deposition method, or a photochemical vapor deposition method.

The inorganic oxide layer may be a single layer formed by a single vapor deposition step or multiple layers formed by a plurality of vapor deposition steps. When the inorganic oxide layer has multiple layers, each layer may be composed of the same inorganic oxide or different inorganic oxides. Each layer may be formed by the same method or different methods.

The inorganic oxide layer is preferably a vapor-deposited film formed by a CVD method, more preferably a carbon-containing silicon oxide deposited film formed by a CVD method. A laminate including such an inorganic oxide layer has, for example, high bending resistance.

The carbon-containing silicon oxide deposited film contains silicon, oxygen, and carbon.

In one embodiment of the carbon-containing silicon oxide deposited film, the carbon content C is preferably 3% or more, more preferably 5% or more, still more preferably 10% or more, and is preferably 50% or less, more preferably 40% or less, still more preferably 35% or less, for example, 3% or more and 50% or less, relative to the total (100%) of the three elements of silicon, oxygen, and carbon. A carbon content C in such a range can result in, for example, a laminate with less deterioration of the gas barrier properties even when bent.

In the present description, the ratio of each element is on a molar basis.

In one embodiment of the carbon-containing silicon oxide deposited film, the silicon content Si is preferably 1% or more, more preferably 3% or more, still more preferably 8% or more, and is preferably 45% or less, more preferably 38% or less, still more preferably 33% or less, for example, 1% or more and 45% or less, relative to the total (100%) of the three elements of silicon, oxygen, and carbon. The oxygen content O is preferably 10% or more, more preferably 20% or more, still more preferably 25% or more, and is preferably 70% or less, more preferably 65% or less, still more preferably 60% or less, for example, 10% or more and 70% or less, relative to the total (100%) of the three elements of silicon, oxygen, and carbon. A silicon content Si and an oxygen content O in such a range can result in, for example, a laminate with much less deterioration of the gas barrier properties even when bent.

In one embodiment of the carbon-containing silicon oxide deposited film, the oxygen content O is preferably higher than the carbon content C, and the silicon content Si is preferably lower than the carbon content C. The oxygen content O is preferably higher than the silicon content Si; that is, the oxygen content O, the carbon content C, and the silicon content Si preferably decrease in this order. This can further suppress, for example, the deterioration of the gas barrier properties even when the laminate is bent.

The carbon content C, the silicon content Si, and the oxygen content O of the carbon-containing silicon oxide deposited film are measured by X-ray photoelectron spectroscopy (XPS) using narrow scan analysis under the following measurement conditions.

(Measurement Conditions)

Apparatus: "ESCA-3400" (manufactured by Kratos)

[1] Spectrum Measurement Conditions

Incident X-ray: MgK$\alpha$ (non-monochromatic X-ray, hv = 1253.6 eV)

X-ray output: 150 W (10 kV x 15 mA)

Measurement region: approximately 6 mm$\phi$

Photoelectron acceptance angle: 90 degrees

[2] Ion Sputtering Conditions

Ionic species: Ar+

Pressure of Ar gas introduction: 2.0 x $10^{-2}$ Pa

Acceleration voltage: 0.2 (kV)

Emission current: 20 (mA)

Ion sputtering time: 30 seconds to measure a spectrum

(Covering Layer)

The barrier substrate may further include a covering layer on the inorganic oxide layer. That is, the barrier substrate may further include a covering layer on the surface of the inorganic oxide layer opposite the surface facing the polypropylene stretched substrate. A laminate including such a barrier substrate has, for example, good oxygen barrier properties and water vapor barrier properties.

In one embodiment, the covering layer contains a resin component. The resin component is, for example, a polyolefin, such as polyethylene, polypropylene, polybutene, or polymethylpentene, a vinyl resin, an acrylic resin, a polyester, a urethane resin, a melamine resin, or an epoxy resin. The resin component content of the covering layer is preferably more than 50% by mass, more preferably 75% by mass or more, and is preferably 95% by mass or less, more preferably 90% by mass or less, for example, more than 50% by mass and 95% by mass or less.

The covering layer may contain the additive agent described above.

The covering layer preferably has a thickness of 0.01 $\mu$m or more, more preferably 0.05 $\mu$m or more, still more preferably 0.1 $\mu$m or more, and preferably 5 $\mu$m or less, more preferably 3 $\mu$m or less, still more preferably 1 $\mu$m or less, for example, 0.01 $\mu$m or more and 5 $\mu$m or less. Such a covering layer has, for example, high scratch resistance.

The covering layer can be formed, for example, by applying a coating liquid for a covering layer to the surface of the inorganic oxide layer and drying the coating liquid. The coating liquid for a covering layer can be prepared, for example, by mixing the above-described resin component, an additive agent as required, and a solvent. Details of these components are as described above. A method for applying the coating liquid for a covering layer may be a known coating method. A method for drying the applied coating liquid for a covering layer is, for example, a method of applying heat, such as hot-air drying, hotroll drying, or infrared irradiation. The drying temperature may be 50°C or more and may be 150°C or less.

In one embodiment, the covering layer may be a barrier coating layer containing a gas barrier resin. The gas barrier resin is, for example, an ethylene-vinyl alcohol copolymer, poly(vinyl alcohol), a polyacrylonitrile, a polyester, a polyamide, such as nylon 6, nylon 6,6, or poly(m-xylylene adipamide), a polyurethane, or an acrylic resin. Among these, poly(vinyl alcohol) is preferred from the perspective of oxygen barrier properties and water vapor barrier properties.

Furthermore, poly(vinyl alcohol) in the barrier coating layer can effectively prevent the occurrence of a crack in the inorganic oxide layer.

The gas barrier resin content of the barrier coating layer is preferably 50% by mass or more, more preferably 60% by mass or more, still more preferably 70% by mass or more, still more preferably 75% by mass or more, and is preferably 95% by mass or less, more preferably 90% by mass or less, for example, 50% by mass or more and 90% by mass or less. Such a barrier coating layer has, for example, good gas barrier properties.

The barrier coating layer may contain the additive agent described above.

The barrier coating layer containing the gas barrier resin preferably has a thickness of 0.01 $\mu$m or more, more preferably 0.1 $\mu$m or more, and preferably 10 $\mu$m or less, more preferably 5 $\mu$m or less, for example, 0.01 $\mu$m or more and 10 $\mu$m or less. A barrier substrate including the barrier coating layer with a thickness equal to or higher than the lower limit has, for example, good gas barrier properties. A barrier substrate including the barrier coating layer with a thickness equal to or lower than the upper limit can improve, for example, the processability and recyclability of the laminate.

Furthermore, the barrier coating layer with a thickness in the above range does not impair the recyclability even when the gas barrier resin is a resin material different from polypropylene.

The barrier coating layer can be formed, for example, by dissolving or dispersing a material, such as a gas barrier resin, in water or an appropriate organic solvent, applying the resulting coating liquid to the surface of the inorganic oxide layer, and drying the coating liquid. The barrier coating layer can also be formed, for example, by applying and drying a commercially available barrier coating agent.

In one embodiment, the covering layer may be a gas barrier coating film formed by subjecting a composition containing a metal alkoxide and a water-soluble polymer to a polycondensation treatment by a sol-gel method in the presence of a sol-gel method catalyst, water, an organic solvent, and the like. A barrier substrate including a gas barrier coating film on an inorganic oxide layer has, for example, good gas barrier properties. The gas barrier coating film contains a hydrolytic polycondensate produced by hydrolysis and polycondensation of the metal alkoxide or the like by a sol-gel method. Such a gas barrier coating film on the inorganic oxide layer can effectively suppress, for example, the occurrence of a crack in the inorganic oxide layer.

The metal alkoxide is represented, for example, by the formula (1):

$$R^1_nM(OR^2)_m \qquad (1)$$

In the formula (1), $R^1$ and $R^2$ each independently denote an organic group with 1 or more and 8 or less carbon atoms, M denotes a metal atom, n denotes an integer of 0 or more, m denotes an integer of 1 or more, and n + m denotes the valence of M. The organic group in $R^1$ and $R^2$ is, for example, an alkyl group with 1 or more and 8 or less carbon atoms, such as a methyl group, an ethyl group, a n-propyl group, an isopropyl group, a n-butyl group, an isobutyl group, a sec-butyl group, a t-butyl group, a n-hexyl group, or a n-octyl group. The metal atom M is, for example, silicon, zirconium, titanium, or aluminum. The metal alkoxide is, for example, an alkoxysilane, such as tetramethoxysilane, tetraethoxysilane, tetrapropoxysilane, or tetrabutoxysilane.

The water-soluble polymer is, for example, a polymer with a hydroxy group, such as poly(vinyl alcohol) or an ethylene-vinyl alcohol copolymer. Depending on desired physical properties, such as oxygen barrier properties, water vapor barrier properties, water resistance, or weather resistance, poly(vinyl alcohol) and an ethylene-vinyl alcohol copolymer may be used alone or in combination, or a gas barrier coating film formed using poly(vinyl alcohol) and a gas barrier coating film formed using an ethylene-vinyl alcohol copolymer may be laminated. The amount of the water-soluble polymer to be used is preferably 3 parts by mass or more, more preferably 5 parts by mass or more, and preferably 500 parts by mass or less, per 100 parts by mass of the metal alkoxide. The gas barrier coating film with a water-soluble polymer content equal to or higher than the lower limit can further improve the oxygen barrier properties and water vapor barrier properties of the laminate. The gas barrier coating film with a water-soluble polymer content equal to or lower than the upper limit can improve the film formability of the gas barrier coating film.

The metal alkoxide may be used together with a silane coupling agent. The silane coupling agent can be a known organoalkoxysilane having an organic reactive group, preferably an organoalkoxysilane having an epoxy group, for example, $\gamma$-glycidoxypropyltrimethoxysilane, $\gamma$-glycidoxypropylmethyldiethoxysilane, or $\beta$-(3,4-epoxycyclohexyl)ethyltri-methoxysilane. The amount of the silane coupling agent to be used is preferably 1 part by mass or more and 20 parts by mass or less per 100 parts by mass of the metal alkoxide.

In the gas barrier coating film, the ratio of the metal alkoxide to the water-soluble polymer (metal alkoxide/water-soluble polymer) is preferably 4.5 or less, more preferably 3.5 or less, and is preferably 1.0 or more, more preferably 1.7 or more, for example, 1.0 or more and 4.5 or less, on a mass basis.

When the ratio of the metal alkoxide to the water-soluble polymer is equal to or lower than the upper limit, it is possible to suppress the deterioration of the gas barrier properties even after the laminate is bent.

When the ratio of the metal alkoxide to the water-soluble polymer is equal to or higher than the lower limit, the heat resistance of the laminate can be improved. This can also suppress the deterioration of the gas barrier properties even after the laminate is subjected to retort treatment and boiling treatment.

The above ratio is a solid content ratio.

The ratio of silicon atoms to carbon atoms (Si/C) on the surface of the gas barrier coating film as measured by X-ray photoelectron spectroscopy (XPS) is preferably 1.60 or less, more preferably 1.35 or less, and is preferably 0.50 or more, more preferably 0.90 or more.

When the ratio of silicon atoms to carbon atoms is equal to or lower than the upper limit, it is possible to suppress the deterioration of the gas barrier properties even after the laminate is bent.

When the ratio of silicon atoms to carbon atoms is equal to or higher than the lower limit, the heat resistance of the laminate can be improved. This can also suppress the deterioration of the gas barrier properties even after the laminate is subjected to retort treatment and boiling treatment.

A ratio of silicon atoms to carbon atoms in such a range can be achieved by appropriately adjusting the ratio of the metal alkoxide to the water-soluble polymer.

In the present description, the ratio of silicon atoms to carbon atoms is on a molar basis.

The ratio of silicon atoms to carbon atoms in X-ray photoelectron spectroscopy (XPS) can be measured by narrow scan analysis under the following measurement conditions.

(Measurement Conditions)

Apparatus: "ESCA-3400" (manufactured by Kratos)

[1] Spectrum Measurement Conditions

Incident X-ray: MgK$\alpha$ (monochromated X-ray, hv = 1253.6 eV)

X-ray output: 150 W (10 kV x 15 mA)

X-ray scan area (measurement region): approximately 6 mm$\phi$

Photoelectron acceptance angle: 90 degrees

[2] Ion Sputtering Conditions

Ionic species: Ar$^+$

Acceleration voltage: 0.2 (kV)

Emission current: 20 (mA)

Etch range: 10 mm$\phi$

Ion sputtering time: 30 seconds + 30 seconds + 60 seconds (120 seconds in total) to measure a spectrum

The gas barrier composition may preferably contain water in an amount of 0.1 mol or more, more preferably 0.5 mol or more, still more preferably 0.8 mol or more, and preferably 100 mol or less, more preferably 60 mol or less, still more preferably 2 mol or less, per mole of the metal alkoxide. A water content equal to or higher than the lower limit can result in, for example, a laminate having improved oxygen barrier properties and water vapor barrier properties. A water content equal to or lower than the upper limit can result in, for example, a rapid hydrolysis reaction.

The gas barrier composition may contain an organic solvent. The organic solvent is, for example, methyl alcohol, ethyl alcohol, n-propyl alcohol, isopropyl alcohol, or n-butyl alcohol.

The sol-gel method catalyst is preferably an acid or an amine compound.

The acid is, for example, a mineral acid, such as sulfuric acid, hydrochloric acid, or nitric acid, or an organic acid, such as acetic acid or tartaric acid. The amount of the acid to be used is preferably 0.001 mol or more and 0.05 mol or less per total mole of alkoxide moieties of the metal alkoxide and the silane coupling agent (for example, silicate moiety). When the amount of the acid to be used is equal to or higher than the lower limit, the catalytic effect can be improved. When the amount of the acid to be used is equal to or lower than the upper limit, a gas barrier coating film with a uniform thickness can be formed.

The amine compound is preferably a tertiary amine that is substantially insoluble in water and soluble in an organic solvent, for example, N,N-dimethylbenzylamine, tripropylamine, tributylamine, or tripentylamine. Among these, N,N-dimethylbenzylamine is preferred.

The amount of the amine compound to be used is preferably 0.01 parts by mass or more, more preferably 0.03 parts by mass or more, and is preferably 1.0 part by mass or less, more preferably 0.3 parts by mass or less, per 100 parts by mass of the metal alkoxide and the silane coupling agent in total. When the amount of the amine compound to be used is equal to or higher than the lower limit, the catalytic effect thereof can be improved. When the amount of the amine compound to be used is equal to or lower than the upper limit, a gas barrier coating film with a uniform thickness can be formed.

A method for applying the gas barrier composition is, for example, roll coating with a gravure roll coater or the like, spray coating, spin coating, dipping, brushing, bar coating, or application means, such as an applicator.

One embodiment of a method for forming a gas barrier coating film will be described below

A gas barrier composition is prepared by mixing a metal alkoxide, a water-soluble polymer, a sol-gel method catalyst, water, an organic solvent, a silane coupling agent as required, and the like. A polycondensation reaction proceeds gradually in the composition. The composition is applied to the inorganic oxide layer and is dried in the usual manner. The drying further promotes the polycondensation of the metal alkoxide and the water-soluble polymer (and the silane coupling agent when the composition contains the silane coupling agent), thereby forming a layer of a composite polymer. This operation may be repeated to stack a plurality of composite polymer layers. For example, the applied composition is preferably heated at a temperature of 20°C or more, more preferably 50°C or more, still more preferably 70°C or more, and preferably 250°C or less, more preferably 220°C or less, still more preferably 150°C or less, still more preferably 120°C or less, particularly preferably 100°C or less, for 1 second or more and 10 minutes or less. Thus, a gas barrier coating film can be formed.

The gas barrier coating film preferably has a thickness of 0.01 μm or more, more preferably 0.1 μm or more, and preferably 100 μm or less, more preferably 10 μm or less, still more preferably 2 μm or less, still more preferably 1 μm or less, particularly preferably 0.5 μm or less, for example, 0.01 μm or more and 100 μm or less. For example, this can improve the gas barrier properties, suppress the occurrence of a crack in the inorganic oxide layer, and improve the recyclability of a packaging bag.

<Polypropylene Stretched Substrate>

The polypropylene stretched substrate as a first substrate may be a polypropylene stretched substrate described in the section <Barrier Substrate>. The polypropylene stretched substrate as a first substrate may be a stretched substrate of another embodiment.

The polypropylene stretched substrate of the first substrate and the polypropylene stretched substrate of the second substrate may be the same or different.

(Stretched Substrate of Another Embodiment)

A stretched substrate of another embodiment contains polypropylene as a main component. The details of polypropylene are as described above, and the description thereof is omitted in this section.

A stretched substrate of another embodiment preferably has a polypropylene content of more than 50% by mass, more preferably 60% by mass or more, still more preferably 70% by mass or more, still more preferably 80% by mass or more, particularly preferably 85% by mass or more, 90% by mass or more, or 95% by mass or more.

A stretched substrate of another embodiment may contain the above resin material other than polypropylene.

A stretched substrate of another embodiment may contain the additive agent described above.

A stretched substrate of another embodiment is a polypropylene substrate subjected to a stretching treatment. A laminate including a stretched substrate of another embodiment has, for example, high heat resistance, impact resistance, water resistance, and dimensional stability, and is suitable as, for example, a packaging material constituting a packaging bag to be subjected to a retort treatment or a boiling treatment.

The stretching treatment may be uniaxial stretching or biaxial stretching.

The stretch ratio of stretching in the machine direction (the flow direction of the substrate, the MD direction) is preferably 2 or more, more preferably 5 or more, and preferably 15 or less, more preferably 13 or less. The stretch ratio of stretching in the transverse direction (the direction perpendicular to the MD direction, the TD direction) is preferably 2 or more, more preferably 5 or more, and preferably 15 or less, more preferably 13 or less. The stretch ratio can be 2 or more to improve the strength and heat resistance of the substrate and improve the printability to the substrate. From the perspective of the fracture limit of the substrate, the stretch ratio is preferably 15 or less.

A stretched substrate of another embodiment used as a first substrate is, for example, a biaxially stretched polypropylene substrate.

A stretched substrate of another embodiment may be subjected to surface treatment. This can improve, for example, the adhesion between a stretched substrate of another embodiment and another layer. The surface treatment method is, for example, a physical treatment, such as a corona discharge treatment, an ozone treatment, a low-temperature plasma treatment using oxygen gas and/or nitrogen gas, or a glow discharge treatment, or a chemical treatment, such as an oxidation treatment using a chemical.

An easily adhesive layer may be provided on the surface of a stretched substrate of another embodiment.

A stretched substrate of another embodiment may have a monolayer structure or a multilayer structure.

A stretched substrate of another embodiment preferably has a thickness of 10 $\mu$m or more, more preferably 15 $\mu$m or more, and preferably 100 $\mu$m or less, more preferably 50 $\mu$m or less, for example, 10 $\mu$m or more and 100 $\mu$m or less. A laminate including a stretched substrate with a thickness equal to or higher than the lower limit has, for example, high strength and heat resistance. A laminate including the stretched substrate with a thickness equal to or lower than the upper limit has, for example, high processability.

<Print Layer>

A laminate according to the present disclosure may have a print layer on the surface of a substrate, such as a first substrate or a second substrate. An image formed on the print layer is, but not limited to, a character, a pattern, a symbol, a combination thereof, or the like. The print layer may be formed using a biomass-derived ink. This can further reduce the environmental load.

A method for forming a print layer is, for example, a known printing method, such as a gravure printing method, an offset printing method, or a flexographic printing method. Among these, the flexographic printing method is preferred from the perspective of environmental load reduction.

The print layer has a thickness of, for example, 0.5 $\mu$m or more and 3 $\mu$m or less.

<Adhesive Layer>

In one embodiment, a laminate according to the present disclosure includes an adhesive layer (second adhesive layer) between a substrate (second substrate) and a sealant layer. In one embodiment, a laminate according to the present disclosure includes a first adhesive layer between a first substrate and a second substrate. In one embodiment, a laminate according to the present disclosure includes a second adhesive layer between a second substrate and a sealant layer. Such a laminate has, for example, high laminate strength between a substrate (second substrate) and a sealant layer, between a first substrate and a second substrate, and between a second substrate and a sealant layer.

(First Adhesive Layer)

The modulus of elasticity of a cross section of a first adhesive layer measured with an atomic force microscope (AFM) is preferably 5 MPa or more, more preferably 10 MPa or more, still more preferably 12 MPa or more, and is preferably 150 MPa or less, more preferably 100 MPa or less, still more preferably 80 MPa or less, for example, 5 MPa or more and 150 MPa or less. A packaging bag produced using a laminate including a first adhesive layer with a modulus of elasticity in the above range tends to have good gas barrier properties and a good appearance even after heat treatment, such as retort treatment. When a print layer is provided on a surface of the first substrate facing the first adhesive layer, the first adhesive layer with a modulus of elasticity equal to or lower than the upper limit tends to have high adhesiveness to the print layer.

Here, the modulus of elasticity of an adhesive layer is measured using an atomic force microscope (AFM) for a cross section of the adhesive layer.

The details of the measurement conditions of the modulus of elasticity using an AFM are described in the section of Examples.

The first adhesive layer has a thickness of 1.0 $\mu$m or more, preferably 1.5 $\mu$m or more, more preferably 2.0 $\mu$m or more, still more preferably 2.5 $\mu$m or more, and preferably 10.0 $\mu$m or less, more preferably 8.0 $\mu$m or less, still more preferably 6.0 $\mu$m or less, particularly preferably 5.0 $\mu$m or less, for example, 1.0 $\mu$m or more and 10.0 $\mu$m or less. When a print layer is provided on a surface of the first substrate facing the first adhesive layer, the first adhesive layer with a thickness equal to or higher than the lower limit can appropriately cover a difference in the level caused by the print layer, and a packaging bag having a good appearance tends to be produced. A laminate including a first adhesive layer with a thickness equal to or higher than the lower limit tends to have high laminate strength even after heat treatment.

(Second Adhesive Layer)

The modulus of elasticity of a cross section of the second adhesive layer measured with an AFM is 20 MPa or more, preferably 25 MPa or more, more preferably 30 MPa. The modulus of elasticity is 50 MPa or less, preferably 45 MPa or less, more preferably 40 MPa or less. The second adhesive layer has a modulus of elasticity of, for example, 20 MPa or more and 50 MPa or less. A laminate including a second adhesive layer with a modulus of elasticity within the above range tends to have high laminate strength and impact resistance. A second adhesive layer having such a modulus of elasticity can be formed, for example, by using a solvent-free adhesive described later and appropriately changing the type and molecular weight of a polymer component contained in a main agent described later, the type of curing agent, the mole ratio (NCO/OH), and aging conditions.

The second adhesive layer has a thickness of 1.0 $\mu$m or more, preferably 1.2 $\mu$m or more, more preferably 1.4 $\mu$m or more. The second adhesive layer has a thickness of 4.5 $\mu$m or less, preferably 4.0 $\mu$m or less, more preferably 3.5 $\mu$m or less. The second adhesive layer has a thickness of 1.0 $\mu$m or more and 4.5 $\mu$m or less. The laminate including such a second adhesive layer can suppress blocking due to protrusion of an adhesive agent during coiling and occurrence of winding misalignment. A packaging bag produced using a laminate including such a second adhesive layer tends to have high impact resistance and accordingly high resistance to drop-induced package rupture and also have high tearability and accordingly high openability. Furthermore, the packaging bag has, for example, high recyclability.

In one embodiment of a laminate according to the present disclosure, the product of the modulus of elasticity (MPa) and the thickness ($\mu$m) of an adhesive layer located between a sealant layer and a substrate adjacent to the sealant layer (for example, an adhesive layer with a two-layer structure or a second adhesive layer with a three-layer structure) is preferably 35 or more, more preferably 40 or more, still more preferably 50 or more. The product of the modulus of elasticity and the thickness of the adhesive layer is preferably 95 or more and is preferably 80 or less, more preferably 60 or less. The product of the modulus of elasticity and the thickness of the adhesive layer is, for example, 35 or more and 95 or less.

In one embodiment of a laminate according to the present disclosure, an adhesive layer in which the product of the modulus of elasticity (MPa) and the thickness ($\mu$m) is 35 or more and 95 or less may be located between a sealant layer and a substrate adjacent to the sealant layer. A packaging bag produced using a laminate of such an embodiment tends to have higher impact resistance (resistance to drop-induced package rupture) and hand tearability (openability) after retort treatment.

(Adhesive Agent)

Each of the adhesive layer, the first adhesive layer, and the second adhesive layer is formed of an adhesive agent. The adhesive agent that forms the first adhesive layer and the adhesive agent that forms the second adhesive layer may be the same or different. The adhesive agent may be any of a onecomponent adhesive, a two-component adhesive, and a non-curable adhesive, and is preferably a two-component adhesive from the perspective that the modulus of elasticity described above can be easily adjusted to the range described above.

A method for producing a laminate using an adhesive agent may be a method of applying the adhesive agent to an object, then placing another object on the resulting adhesive layer, and curing the adhesive layer sandwiched therebetween. The object is, for example, a first substrate, a second substrate, or a sealant film. The step of curing the adhesive layer is hereinafter also referred to as an "aging step".

The conditions for aging the adhesive agent are described below. The aging temperature is preferably 25°C or more, more preferably 30°C or more, still more preferably 35°C or more, and is preferably 80°C or less, more preferably 70°C or less, still more preferably 60°C or less. The aging time is preferably 5 hours or more, more preferably 10 hours or more, still more preferably 20 hours or more, and is preferably 150 hours or less, more preferably 135 hours or less, still more preferably 120 hours or less. The modulus of elasticity of the adhesive layer tends to increase with the aging temperature. The modulus of elasticity of the adhesive layer tends to increase with the aging time.

The adhesive agent is, for example, a polyurethane adhesive agent, a polyester adhesive agent, a polyether adhesive agent, a rubber adhesive agent, a vinyl adhesive agent, an olefin adhesive agent, a silicone adhesive agent, an epoxy adhesive agent, or a phenolic adhesive agent. Among these, from the perspective of easily adjusting the modulus of elasticity to the above-described range, a polyurethane adhesive agent, a polyester adhesive agent, and a polyether adhesive agent are preferred, a polyurethane adhesive agent and a polyester adhesive agent are more preferred, a polyurethane adhesive agent is still more preferred, and a two-component polyurethane adhesive agent is particularly preferred.

The adhesive agent may be a solvent-based adhesive or a solvent-free adhesive.

The solvent-based adhesive refers to an adhesive agent used for a method of applying an adhesive agent to an object, heating the adhesive agent in an oven or the like to volatilize a solvent in the adhesive agent, and then bonding the object to another object. In a two-component adhesive, either one or both of the main agent and the curing agent contain a solvent. The solvent is, for example, an organic solvent, more specifically, a hydrocarbon solvent, such as toluene, xylene, n-hexane, or methylcyclohexane; an ester solvent, such as ethyl acetate, n-propyl acetate, n-butyl acetate, or isobutyl acetate; an alcohol solvent, such as methanol, ethanol, isopropyl alcohol, n-butyl alcohol, or isobutyl alcohol; or a ketone solvent, such as acetone, methyl ethyl ketone, methyl isobutyl ketone, or cyclohexanone.

The solvent-free adhesive refers to an adhesive agent used for a method of applying an adhesive agent to an object and then bonding the object to another object without necessarily requiring a step of heating the adhesive agent in an oven or the like to volatilize a solvent. In a two-component adhesive, both the main agent and the curing agent contain substantially no solvent. The phrase "contain substantially no" includes a case where a solvent used as a reaction medium at the time of producing a constituent of an adhesive agent, or a constituent of the main agent and/or the curing agent in the case of a two-component adhesive, is not completely removed, and a trace amount of solvent remains in the adhesive agent or in the main agent and/or the curing agent in the case of a two-component adhesive.

The two-component polyurethane adhesive agent has a main agent and a curing agent. The two-component polyurethane adhesive agent may be of a solvent type or a solvent-free type. The two-component polyurethane adhesive agent will be described below.

The polyurethane adhesive agent has, for example, a main agent containing a polyol compound and a curing agent containing a polyisocyanate compound. A cured product (reaction product) formed by mixing such a main agent and a curing agent is, for example, polyurethane, more specifically, a polyester polyurethane, a polyether polyurethane, a polycarbonate polyurethane, or an acrylic polyurethane.

The polyol compound has two or more hydroxy groups per molecule. The polyol compound is, for example, a polyester polyurethane polyol, a polyester polyol, a polyether polyol, a polycarbonate polyol, or an acrylic polyol. Among these, from the perspective that an adhesive layer with a modulus of elasticity in the above-described range is easily formed, a polyester polyurethane polyol and a polyester polyol are preferred, a polyester polyurethane polyol is more preferred in the case of a solvent-based adhesive, and a polyester polyol is more preferred in the case of a solvent-free adhesive.

The polyester polyurethane polyol is a compound with two or more hydroxy groups, two or more ester bonds, and two or more urethane bonds per molecule, and has, for example, a polyester polyurethane structure as a main backbone. The polyester polyol is a compound with two or more hydroxy groups and two or more ester bonds per molecule and has, for example, a polyester structure as a main backbone. The polyether polyol is a compound with two or more hydroxy groups and two or more ether bonds per molecule. The polycarbonate polyol is a compound with two or more hydroxy groups and two or more carbonate bonds per molecule.

From the perspective of coatability, a polymer component (for example, a polyol compound) contained in a main agent of a two-component solvent-based adhesive has a weight-average molecular weight (Mw) of preferably 11,000 or more, more preferably 13,000 or more, still more preferably 15,000 or more, still more preferably 18,000 or more, particularly preferably 20,000 or more, and preferably 100,000 or less, more preferably 50,000 or less, still more preferably 40,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent has a polydispersity (Mw/Mn) of preferably 5.0 or less, more preferably 4.5 or less, still more preferably 4.0 or less, and preferably 1.5 or more, more preferably 2.0 or more, still more preferably 2.5 or more. Mn denotes the number-average molecular weight of the polymer component (for example, the polyol compound) contained in the main agent. The average molecular weight is measured in terms of polystyrene by gel permeation chromatography (GPC) according to JIS K 7252-1: 2016.

From the perspective of coatability, a polymer component (for example, a polyol compound) contained in a main agent of a two-component solvent-free adhesive has a weight-average molecular weight (Mw) of preferably 800 or more, more preferably 1,200 or more, still more preferably 2,000 or more, and preferably 10,000 or less, more preferably 8,000 or less, still more preferably 6,000 or less. The modulus of elasticity of the adhesive layer tends to increase as the Mw decreases, and the modulus of elasticity of the adhesive layer tends to decrease as the Mw increases.

The polymer component (for example, the polyol compound) contained in the main agent preferably has a polydispersity (Mw/Mn) of 2.8 or less, more preferably 2.7 or less, still more preferably 2.6 or less, particularly preferably 2.5 or less, and preferably 1.2 or more, more preferably 1.5 or more, still more preferably 2.0 or more. Mn denotes the number-average molecular weight of the polymer component (for example, the polyol compound) contained in the main agent.

The polyisocyanate compound has two or more isocyanate groups per molecule. The polyisocyanate compound is, for example, an aromatic isocyanate or an aliphatic isocyanate. The polyisocyanate compound may also be a blocked isocyanate compound produced by an addition reaction using a known isocyanate blocking agent by an appropriate traditional method.

The polyisocyanate compound is, for example, an aliphatic isocyanate compound, such as tetramethylene diisocyanate, hexamethylene diisocyanate (HDI), norbornene diisocyanate, or isophorone diisocyanate (IPDI); an aromatic isocyanate compound, such as diphenylmethane diisocyanate, hydrogenated diphenylmethane diisocyanate, xylylene diisocyanate (XDI), hydrogenated xylylene diisocyanate, tolylene diisocyanate (TDI), naphthalene diisocyanate, or α,α,α',α'-tetramethyl-m-xylylene diisocyanate; a dimer or a trimer (for example, an isocyanurate) derived from these compounds; or an adduct, a biuret, or an allophanate produced by reacting these compounds with a low-molecular-weight active hydrogen compound, an alkylene oxide adduct thereof, or a high-molecular-weight active hydrogen compound.

The low-molecular-weight active hydrogen compound is, for example, ethylene glycol, propylene glycol, diethylene glycol, dipropylene glycol, 1,4-butanediol, neopentyl glycol, 1,6-hexamethylene glycol, 1,8-octamethylene glycol, 1,4-cyclohexanedimethanol, m-xylylene alcohol, 1,3-bishydroxyethylbenzene, 1,4-bishydroxyethylbenzene, trimethylolethane, trimethylolpropane, glycerol, pentaerythritol, erythritol, sorbitol, ethylenediamine, monoethanolamine, diethanolamine, triethanolamine, or m-xylylenediamine, preferably trimethylolpropane. The high-molecular-weight active hydrogen compound is, for example, a polyester, a polyether polyol, or a polyamide.

The main agent containing the polyol compound and the curing agent containing the polyisocyanate compound are preferably used, for example, in such a quantitative ratio that the mole ratio (NCO/OH) of all the isocyanate groups of the polyisocyanate compound to all the hydroxy groups of the polyol compound is as described below. That is, the mole ratio (NCO/OH) is preferably 0.5 or more, more preferably 1.0 or more, still more preferably 1.5 or more, and is preferably 8.0 or less, more preferably 6.0, still more preferably 5.0 or less, and, in the case of a solvent-free adhesive, is still more preferably 4.0 or less, particularly preferably 3.0 or less. As the mole ratio (NCO/OH) increases, the modulus of elasticity of the adhesive layer tends to increase, and as the mole ratio (NCO/OH) decreases, the modulus of elasticity of the adhesive layer tends to decrease.

<Sealant Layer>

A laminate according to the present disclosure includes a sealant layer.

The sealant layer is an unstretched polypropylene film containing polypropylene as a main component. The sealant layer contains a resin material of the same type as the polypropylene stretched substrate, that is, polypropylene as a main component. Thus, the laminate can be made of a single material. This eliminates the need to separate the substrate and the sealant layer of a used packaging bag collected and can improve the recyclability of the packaging bag.

The sealant layer may have a monolayer structure or a multilayer structure.

The sealant layer preferably has a polypropylene content of more than 50% by mass, more preferably 60% by mass or more, still more preferably 70% by mass or more, still more preferably 80% by mass or more, particularly preferably 85% by mass or more, 90% by mass or more, or 95% by mass or more. A laminate including such a sealant layer has, for example, high recyclability.

The polypropylene is, for example, a propylene homopolymer, a propylene random copolymer, such as a propylene-α-olefin random copolymer, or a propylene block copolymer, such as a propylene-α-olefin block copolymer. The α-olefin is described in detail above. From the perspective of heat sealability, the polypropylene has a density of, for example, 0.88 $g/cm^3$ or more and 0.92 $g/cm^3$ or less. The density is measured in accordance with JIS K 7112: 1999, Method D (density-gradient tube method, 23°C). From the perspective of environmental load reduction, biomass-derived polypropylene and/or recycled polypropylene may be used.

The sealant layer may contain the additive agent described above.

The sealant layer preferably has a thickness of 10 μm or more, more preferably 20 μm or more, and preferably 200 μm or less, more preferably 150 μm or less, for example, 10 μm or more and 200 μm or less. A laminate including a sealant layer with a thickness equal to or higher than the lower limit has, for example, high seal strength. A laminate including a sealant layer with a thickness equal to or lower than the upper limit has, for example, high processability. When a pouch (in particular, a retort pouch) is produced from a laminate, the sealant layer preferably has a thickness of 30 μm or more and 100 μm or less.

The sealant film can be produced, for example, by a known method. The sealant film can be produced by mixing the materials described above by a common method and forming the resulting mixture into a film by a common method. The sealant film is preferably a film produced by extrusion. The extrusion is preferably performed by a T-die method or an inflation method. More specifically, the sealant film can be formed by drying materials constituting the sealant film as required, then supplying the materials to a melt extruder heated to a temperature equal to or higher than the melting points of the materials to melt the materials, extruding the materials into a film, for example, from a die, such as a T-die, and rapidly cooling and solidifying the extruded film using a rotating cooling drum or the like.

The melt extruder can be a single-screw extruder, a twin-screw extruder, a vent extruder, a tandem extruder, or the like, depending on the purpose. The temperature of the molten polymer extruded from the melt extruder may be, for example, 200°C or more and 300°C or less, or 220°C or more and 270°C or less.

The sealant layer has a composite modulus of elasticity of preferably 900 MPa or less, more preferably 830 MPa or less, still more preferably 700 MPa or less, and preferably 300 MPa or more, more preferably 400 MPa or more, still more preferably 500 MPa or more, for example, 300 MPa or more and 900 MPa or less. A packaging bag produced using a laminate including a sealant layer with a composite modulus of elasticity in the above range tends to have high impact resistance and accordingly high resistance to drop-induced package rupture.

The composite modulus of elasticity of the sealant layer is measured by a nanoindentation method. More specifically, the composite modulus of elasticity is measured using a nanoindenter on a cross section of the sealant layer of the laminate as a measurement surface.

The cross section is obtained by folding a laminate according to the present disclosure into a V shape with the sealant film facing inward, heat sealing the folded laminate so as to have a width of 130 mm and a height of 165 mm to produce a bag-like pouch, filling the pouch with 100 mL of water from an opening, heat-sealing the opening to seal the pouch, and tearing the pouch in the thickness direction of the laminate after a retort sterilization treatment of a hot water type at a retort temperature of 121°C for a retort time of 30 minutes.

The indenter is pressed into an exposed cross section of the sealant layer at three positions in the thickness direction of the sealant layer: a position 2 $\mu$m inside from the interface with the adhesive layer, a position near the central portion, and a position 2 $\mu$m inside from the sealing surface. For example, when the sealant layer has a three-layer structure, the position 2 $\mu$m inside from the sealing surface corresponds to the first layer (sealing layer), the position near the central portion corresponds to the second layer (core layer), and the position 2 $\mu$m inside from the interface with the adhesive layer corresponds to the third layer (surface layer).

The measurement conditions are as described below. A Berkovich indenter (triangular pyramid indenter) is used as the indenter of the nanoindenter. The indenter is pressed into the sealant layer from the cross section of the sealant layer to an indentation depth of 100 nm over 3 seconds, this state is held for 5 seconds, and the load is then removed over 3 seconds to obtain the maximum load $P_{max}$, the projected contact area $A_p$ at the maximum depth, and a load-displacement curve. The composite modulus of elasticity is calculated from the load-displacement curve using the following formula (1).

[Math. 1]

$$E_r = \frac{S\sqrt{\pi}}{2\sqrt{A_p}} \quad \cdots \quad (1)$$

In the formula (1), $A_p$ denotes the projected contact area, S denotes the contact stiffness, and $E_r$ denotes the composite modulus of elasticity of the sealant layer.

The measurement is performed in a room temperature (23°C) environment. The measurement is performed at five or more locations (five points) on the same cross section, and the composite modulus of elasticity is defined as the arithmetic mean of the values at five locations (five points) measured with good reproducibility. When the sealant layer has a multilayer structure including two or more layers, the arithmetic mean calculated from the values measured at positions near the central portion corresponding to the core layer is defined as the composite modulus of elasticity of the sealant layer. Details of the measurement conditions are described in the section of Examples.

When the sealant layer contains a propylene block copolymer, the composite modulus of elasticity of the sealant layer can be adjusted by the ethylene-propylene rubber (EPR) content. More specifically, as the ethylene-propylene rubber (EPR) content increases, the composite modulus of elasticity can be decreased, and as the ethylene-propylene rubber (EPR) content decreases, the composite modulus of elasticity can be increased.

When the sealant layer contains a propylene block copolymer, the composite modulus of elasticity of the sealant layer can be adjusted by the amount of additive agent, such as polyethylene or an elastomer. More specifically, as the additive agent content increases, the composite modulus of elasticity can be decreased, and as the additive agent content decreases, the composite modulus of elasticity can be increased.

The sealant layer is preferably an unstretched polypropylene film from the perspective of heat sealability, and the unstretched polypropylene film can be produced, for example, by a casting method, a T-die method, an inflation method, or the like.

The sealant layer may be subjected to the surface treatment described above.

[Packaging Bag]

A laminate according to the present disclosure is suitably used as a packaging material. The packaging material is used to produce a packaging bag. A packaging bag according to the present disclosure includes the laminate described above. A laminate according to the present disclosure can be used as a packaging material to produce a packaging bag. In one embodiment, a packaging bag can be produced by folding a laminate according to the present disclosure in half such that a substrate or a first substrate is positioned on the outside and a sealant layer is positioned on the inside, and heat-sealing an end portion and the like of the laminate. In another embodiment, a packaging bag can be produced by stacking a plurality of laminates according to the present disclosure with sealant layers facing each other, and heat-sealing an end portion and the like of the laminates. The packaging bag may be entirely constituted by the laminate, or the packaging bag may be partially constituted by the laminate.

The packaging bag may have various forms, for example, a standing pouch type, a side seal type, a two-sided seal type, a three-sided seal type, a four-sided seal type, an envelope seal type, a butt seal type (pillow seal type), a ribbed seal type, a flat bottom seal type, a square bottom seal type, or a gusset type. The heat sealing method is, for example, bar sealing, rotating roll sealing, belt sealing, impulse sealing, high-frequency sealing, or ultrasonic sealing.

The packaging bag may have an easy-to-open portion. The easy-to-open portion is, for example, a notch portion serving as a starting point for tearing a packaging bag, or a half-cut line formed using laser processing, a cutter, or the like as a tear line for a packaging bag.

The packaging bag may have a venting mechanism. The venting mechanism is configured to allow the inside of the packaging bag to communicate with the outside to release the vapor when the vapor pressure in the packaging bag reaches a predetermined value or more, and is also configured to suppress the release of the vapor at a portion other than the venting mechanism. The venting mechanism includes, for example, a venting seal portion protruding from a side seal portion toward the inside of the packaging bag and an unsealed portion separated from a content storage portion by the venting seal portion. The unsealed portion communicates with the outside of the packaging bag. The packaging bag in which the contents are filled and the opening is heat-sealed is heated using a microwave oven or the like. This increases the internal pressure and separates the venting seal portion. The vapor is released to the outside of the packaging bag through the separated portion of the venting seal portion and through the unsealed portion.

The contents to be contained in a packaging bag include, for example, a liquid, a solid, a powder, or a gel. The contents may be a food or drink or may be a non-food or non-drink, such as a chemical product, a cosmetic product, a pharmaceutical agent, a metal component, or an electronic component. After the contents are stored in a packaging bag, the opening of the packaging bag can be heat-sealed to seal the packaging bag.

Furthermore, the contents may be a heat-sterilized food (heat-sterilized food, such as retort food, boiled food, or pasteurized beverage). A packaging bag according to the present disclosure may be a pouch for storing a heat-sterilized food.

As specific examples of the packaging bag, a pouch and a standing pouch will be described below.

A pouch is a small-sized packaging bag and is used to store, for example, 1 g or more and 200 g or less of contents. The contents to be stored in a pouch include, for example, sauce, soy sauce, dressing, ketchup, syrup, cooking alcohol, or another liquid or viscous seasoning; liquid soup, powdered soup, or fruit juice; spice; pet food; liquid beverage, jelly beverage, instant food, or another food or drink; or non-food, such as a chemical product, a cosmetic product, a pharmaceutical agent, a metal component, or an electronic component.

A standing pouch is used, for example, to store 50 g or more and 2000 g or less of contents. The contents to be stored in a standing pouch include, for example, shampoo, rinse, conditioner, hand soap, body soap, aromatic, deodorant, deodorizer, insect repellent, or detergent; dressing, edible oil, mayonnaise, or another liquid or viscous seasoning; liquid beverage, jelly beverage, instant food, or another food or drink; pet food; cream; a metal component, or an electronic component.

In one embodiment, the contents of a packaging bag include pet food.

In one embodiment, a packaging bag according to the present disclosure can suppress the deterioration of the gas barrier properties even when subjected to heat treatment and is therefore suitable as a heat-sterilized pouch or a microwavable packaging bag. A packaging bag according to the present disclosure is also suitable as a microwave boiling or retort pouch. Here, the heat-sterilized pouch refers to either a pouch that can be subjected to heat sterilization treatment in a state of storing the contents or a pouch that has been subjected to heat sterilization treatment in a state of storing the contents. The microwavable packaging bag refers to a packaging bag that can be heated with a microwave oven.

The heat-sterilized pouch may be a pouch subjected to pressurized heat sterilization treatment (hereinafter also referred to as a "retort pouch"), a pouch subjected to boiling treatment (hereinafter also referred to as a "boiling pouch"), a pouch subjected to pasteurization treatment (hereinafter also referred to as "pasteurization pouch"), or the like. The retort pouch is a packaging bag that is filled with contents, such as food and drink, is sealed, and is then subjected to heat sterilization treatment (pressurized heat sterilization treatment) with water or water vapor at a temperature of more than 100°C under pressure. The boiling pouch or the pasteurization pouch is a packaging bag that is filled with contents, such as food and drink, is sealed, and is then subjected to boiling treatment at a temperature of 100°C or less.

In one embodiment, a packaging bag according to the present disclosure is a retort pouch. The pressurized heat sterilization treatment may be performed under various conditions, and the retort pouch includes any pouch subjected to a general pressurized heat sterilization treatment. For example, among pressurized heat sterilization treatments, a treatment at a treatment temperature of 105°C or more and 115°C or less may be referred to as a semi-retort treatment, a treatment at a treatment temperature of more than 115°C and less than 130°C may be referred to as a retort treatment, and a treatment at a treatment temperature of more than 135°C and 140°C or less may be referred to as a high retort treatment.

The retort treatment time is, for example, 5 minutes or more and 60 minutes or less, preferably 15 minutes or more and 40 minutes or less.

In one embodiment, a packaging bag according to the present disclosure is a retort pouch.

The oxygen permeability (unit: cc/m$^2$·day·atm) of a retort pouch according to the present disclosure is measured in accordance with JIS K 7126-2: 2006 at a temperature of 23°C and at a relative humidity of 90%.

The retort pouch preferably has an oxygen permeability of 3.0 or less, more preferably 2.0 or less, still more preferably 1.5 or less, particularly preferably 1.0 or less. A retort pouch with an oxygen permeability of 3.0 or less after retort treatment can be suitably used as food packaging for long-term storage.

The lower limit of the oxygen permeability of the retort pouch is preferably as low as possible and may be, for example, 0.1.

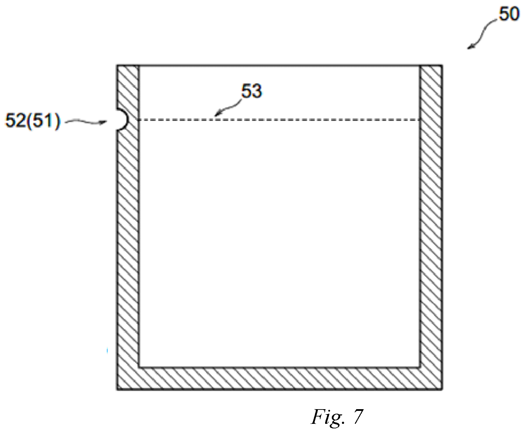

Fig. 7 illustrates a packaging bag 50 produced by bonding two laminates. The hatched area indicates a heat-sealed portion. The packaging bag 50 may have an easy-to-open portion 51. The easy-to-open portion 51 is, for example, a notch portion 52 serving as a starting point for tearing, or a half-cut line 53 formed using laser processing, a cutter, or the like as a tear line.

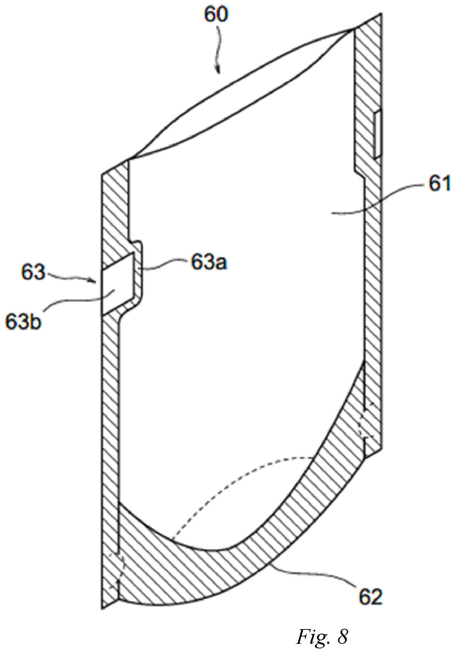

Fig. 8 schematically shows an example of the configuration of a standing pouch. The hatched area indicates a heat-sealed portion. In one embodiment, a standing pouch 60 includes a trunk portion (side sheet) 61 and a bottom portion (bottom sheet) 62. The side sheet 61 and the bottom sheet 62 may be composed of the same member or different members. The bottom sheet 62 can maintain the shape of the side sheet 61 and make the pouch free-standing, thus forming a pouch of standing type. A storage space for storing contents is formed in a region surrounded by the side sheet 61 and the bottom sheet 62.

The standing pouch 60 may have a venting mechanism 63. The venting mechanism 63 includes a venting seal portion 63a protruding from the side seal portion toward the inside of the packaging bag and an unsealed portion 63b separated from a content storage portion by the venting seal portion 63a. The unsealed portion 63b communicates with the outside of the packaging bag.

In the standing pouch, only the trunk portion may be composed of a laminate according to the present disclosure, only the bottom portion may be composed of the laminate, or both the trunk portion and the bottom portion may be composed of the laminate.

In one embodiment, the side sheet can be formed by making a bag such that a sealant layer of a laminate according to the present disclosure is the innermost layer. In one embodiment, the side sheet can be formed by preparing two laminates according to the present disclosure, stacking these laminates with sealant layers facing each other, and heat-sealing side edge portions on both sides of the laminates to make a bag.

In another embodiment, the side sheet can be formed by preparing two laminates according to the present disclosure, stacking these laminates with sealant layers facing each other, inserting two laminates folded in a V shape with the sealant layers being on the outside between the laminates in the side edge portions on both sides of the stacked laminates, and heat-sealing the laminates. A standing pouch with a trunk portion having a side gusset can be produced in this way.

In one embodiment, the bottom sheet can be formed by inserting a laminate between lower portions of side sheets made into a bag and heat-sealing them. More specifically, the bottom sheet can be formed by inserting a laminate folded in a V shape with a sealant layer being on the outside between lower portions of side sheets made into a bag and heat-sealing them.

In one embodiment, the bottom portion is formed by preparing two laminates, stacking these laminates with sealant layers facing each other, folding another laminate into a V shape with a sealant layer being on the outside, placing the other laminate between the lower portions of the laminates facing each other, and heat-sealing them. Two sides adjacent to the bottom portion are then heat-sealed to form a trunk portion. Thus, a standing pouch according to one embodiment can be formed.

[Mechanism of Action]

A laminate for a packaging material is used to make a packaging bag, such as a retort pouch. A packaging bag using a laminate is opened after retort treatment or the like in a state of containing contents. Here, since the packaging bag after the retort treatment is required to have gas barrier properties, a barrier substrate is used for the laminate. However, when a laminate including a gas barrier substrate and a sealant layer has low interlayer adhesiveness, the packaging bag after retort treatment has insufficient drop impact resistance. Thus, a laminate used for a packaging bag preferably maintains interlayer adhesiveness even after retort treatment.

When the thickness of an adhesive layer provided between layers is increased to improve the interlayer adhesiveness of the laminate, the adhesive agent may protrude during coiling of the laminate, which may cause blocking or winding misalignment due to the absence of initial tackiness before curing. Thus, there is a limit to the adjustment only by an adhesive layer.

In a laminate according to the present disclosure, a barrier substrate and a sealant layer are laminated via an adhesive layer, the modulus of elasticity and thickness of the adhesive layer and the modulus of elasticity of the sealant layer are specified, a stretched substrate with a multilayer structure including at least a first surface resin layer, a polypropylene layer, and a second surface resin layer is used as a polypropylene stretched substrate constituting the barrier substrate, and the second surface resin layer containing a specific component is disposed so as to face the adhesive layer. Thus, the second surface resin layer and the adhesive layer are strongly bonded, and the barrier substrate and the sealant layer in the laminate have high adhesion strength even after retort treatment. Thus, a laminate according to the present disclosure has high drop impact resistance after retort treatment when used for a packaging bag, such as a retort pouch. Furthermore, since the modulus of elasticity and thickness of an adhesive layer and the modulus of elasticity of a sealant layer are specified, a laminate according to the present disclosure also has high openability after retort treatment.

The present disclosure relates to, for example, the following [1] to [11].

[1] A laminate including: a second substrate; a second adhesive layer; and a sealant layer in this order in a thickness direction,

wherein the laminate includes only one substrate,

the second substrate has a multilayer structure including a first surface resin layer, a polypropylene layer, and a second surface resin layer in this order in a thickness direction and is disposed such that the second surface resin layer faces the second adhesive layer,

the second surface resin layer contains a random copolymer of propylene and an $\alpha$-olefin other than propylene in an amount of 50% by mass or more based on a total amount of the second surface resin layer,

the second adhesive layer has a thickness of 1 $\mu$m or more and 4.5 $\mu$m or less and a modulus of elasticity of 20 MPa or more and 50 MPa or less, and

the sealant layer is an unstretched polypropylene film and has a composite modulus of elasticity of 900 MPa or less.

[2] A laminate including: a first substrate; a first adhesive layer; a second substrate; a second adhesive layer; and a sealant layer in this order in a thickness direction,

wherein the first substrate is a polypropylene stretched substrate,

the second substrate has a multilayer structure including a first surface resin layer, a polypropylene layer, and a second surface resin layer in this order in a thickness direction and is disposed such that the first surface resin layer faces the first adhesive layer and the second surface resin layer faces the second adhesive layer,

the second surface resin layer contains a random copolymer of propylene and an $\alpha$-olefin other than propylene in an amount of 50% by mass or more based on a total amount of the second surface resin layer,

the second adhesive layer has a thickness of 1 $\mu$m or more and 4.5 $\mu$m or less and a modulus of elasticity of 20 MPa or more and 50 MPa or less, and

the sealant layer is an unstretched polypropylene film and has a composite modulus of elasticity of 900 MPa or less.

[3] The laminate according to [1] or [2], containing at least one of a propylene-ethylene random copolymer and a propylene-ethylene-butene random copolymer as the random copolymer.

[4] The laminate according to [1] or [2], wherein the polypropylene layer has a propylene homopolymer content of more than 50% by mass.

[5] The laminate according to [1] or [2], wherein the first surface resin layer has the same configuration as the second surface resin layer.

[6] The laminate according to [1] or [2], wherein the laminate includes one or more barrier layers.

[7] The laminate according to [1] or [2], wherein a polypropylene content relative to a total resin material content of the laminate is 80% by mass or more.

[8] The laminate according to any one of [1] to [7], which is a packaging material.

[9] A packaging bag including the laminate according to [8].

[10] The packaging bag according to [9], which is a pouch for storing a heat-sterilized food.

[11] A heat-sterilized pouch including

the packaging bag according to [9] or [10], and

a heat-sterilized food stored in the packaging bag.

An embodiment of the present disclosure relates to, for example, the following [1A] to [13A].

[1A] A laminate including: a substrate; an adhesive layer; and a sealant layer in this order in a thickness direction,

wherein the substrate is a barrier substrate including a stretched substrate containing polypropylene as a main component and an inorganic oxide layer in this order in a thickness direction,

the stretched substrate has a multilayer structure including a first surface resin layer, a polypropylene layer, and a second surface resin layer in this order in a thickness direction and is disposed such that the first surface resin layer faces the inorganic oxide layer and the second surface resin layer faces the adhesive layer,

the second surface resin layer contains a random copolymer of propylene and an $\alpha$-olefin other than propylene in an amount of 50% by mass or more based on a total amount of the second surface resin layer,

the adhesive layer has a thickness of 1 $\mu$m or more and 4.5 $\mu$m or less and a modulus of elasticity of 20 MPa or more and 50 MPa or less, and

the sealant layer contains polypropylene as a main component and has a composite modulus of elasticity of 900 MPa or less.

[2A] The laminate according to [1A], containing at least one of a propylene-ethylene random copolymer and a propylene-ethylene-butene random copolymer as the random copolymer.

[3A] The laminate according to [1A] or [2A], wherein the polypropylene layer contains a propylene homopolymer as a main component.

[4A] The laminate according to any one of [1A] to [3A], wherein the first surface resin layer has the same configuration as the second surface resin layer.

[5A] The laminate according to any one of [1A] to [4A], wherein the product of the modulus of elasticity (MPa) and the thickness ($\mu$m) of the adhesive layer is 35 or more and 95 or less.

[6A] The laminate according to any one of [1A] to [5A], wherein the substrate further includes a covering layer on a surface of the inorganic oxide layer opposite to the surface facing the stretched substrate.

[7A] The laminate according to any one of [1A] to [6A],

wherein the laminate includes a first substrate, a second substrate, the adhesive layer, and the sealant layer in this order in a thickness direction,

the second substrate is the barrier substrate, and

the stretched substrate is disposed such that the first surface resin layer faces the inorganic oxide layer and the second surface resin layer faces the adhesive layer.

[8A] The laminate according to [7A], wherein the first substrate is a stretched substrate containing polypropylene as a main component.

[9A] The laminate according to [7A] or [8A], including

a first adhesive layer located between the first substrate and the second substrate, and

a second adhesive layer located between the second substrate and the sealant layer,

the second adhesive layer has a thickness of 1 $\mu$m or more and 4.5 $\mu$m or less and a modulus of elasticity of 20 MPa or more and 50 MPa or less, and

the stretched substrate constituting the second substrate is disposed such that the first surface resin layer faces the inorganic oxide layer and the second surface resin layer faces the second adhesive layer.

[10A] The laminate according to any one of [1A] to [9A], wherein the polypropylene content relative to the total resin material content of the laminate is 80% by mass or more.

[11A] The laminate according to [10A], which is a packaging material.

[12A] A packaging bag including the laminate according to [11A].

[13A] The packaging bag according to [12A], which is a pouch subjected to retort treatment or boiling treatment.

EXAMPLES

A laminate and a packaging bag according to the present disclosure will be more specifically described below based on specific examples.

[Production of Transparent Barrier Substrate]

- Transparent Barrier Substrate 1

An acrylic resin with a hydroxy group (number-average molecular weight: 25,000, glass transition temperature: 99°C, hydroxyl value: 80 mg KOH/g) was diluted with a mixed solvent of methyl ethyl ketone and ethyl acetate (mixing ratio: 1:1) to a solid concentration of 10% by mass to prepare a main agent. An ethyl acetate solution containing tolylene diisocyanate (solid content: 75% by mass) was added to the main agent as a curing agent to prepare a solution for forming a surface coating layer. The amount of the curing agent used was 10 parts by mass per 100 parts by mass of the main agent.
A biaxially stretched polypropylene film with a corona-treated surface and with a thickness of 20 $\mu$m was prepared. The biaxially stretched polypropylene film was composed of three layers; the first surface resin layer (first skin layer) was 0.6 $\mu$m, the polypropylene layer (core layer) was 18.8 $\mu$m, and the second surface resin layer (second skin layer) was 0.6 $\mu$m.
The resin content of each resin composition constituting the first surface resin layer and the second surface resin layer was 100% by mass of a propylene-ethylene-butene random copolymer.
Furthermore, the resin content of the resin composition constituting the polypropylene layer (core layer) was 100% by mass of a homopolypropylene.
The solution for forming a surface coating layer was applied to the corona-treated surface of the film (the surface of the first surface resin layer) and was dried to form a surface coating layer with a thickness of 0.5 $\mu$m. Thus, a resin substrate was produced.
A carbon-containing silicon oxide (silica) deposited film with a thickness of 12 nm was formed on the surface coating layer of the resin substrate using a low-temperature plasma chemical vapor deposition apparatus as a real apparatus (a CVD method) while applying tension to the resin substrate by roll-to-roll. The conditions for forming the deposited film were as described below.

(Formation Conditions)

- Hexamethyldisiloxane:oxygen gas:helium = 1:10:10 (unit: slm)

- Electricity supplied to cooling/electrode drum: 22 kW

- Line speed: 100 m/min

The carbon content C, the silicon content Si, and the oxygen content O of a carbon-containing silicon oxide deposited film were measured. The carbon content C, the silicon content Si, and the oxygen content O were 32.7%, 29.8%, and 37.5%, respectively, relative to the total (100%) of the three elements of silicon, oxygen, and carbon. These element contents were measured by X-ray photoelectron spectroscopy (XPS) using narrow scan analysis under the above-described measurement conditions.

385 g of water, 67 g of isopropyl alcohol, and 9.1 g of 0.5 N hydrochloric acid were mixed to prepare a solution with a pH of 2.2. This solution was mixed with 175 g of tetraethoxysilane as a metal alkoxide and 9.2 g of glycidoxypropyltrimethoxysilane as a silane coupling agent while cooling to 10°C to prepare a solution A. 14.7 g of poly(vinyl alcohol) with a degree of saponification of 99% or more and a degree of polymerization of 2400 as a water-soluble polymer, 324 g of water, and 17 g of isopropyl alcohol were mixed to prepare a solution B. The solution A and the solution B were mixed at 6.5:3.5 based on mass (solution A:solution B) to prepare a barrier coating agent. The barrier coating agent was applied by a spin coating method to the deposited film formed on the resin substrate and was heat-treated in an oven at 80°C for 60 seconds to form a barrier coating layer with a thickness of 300 nm.

A transparent barrier substrate (IBOPP) 1 thus produced included a biaxially stretched polypropylene film with a thickness of 20 μm, a surface coating layer with a thickness of 0.5 μm, a carbon-containing silicon oxide (silica) deposited film with a thickness of 12 nm, and a barrier coating layer with a thickness of 300 nm in this order.

- Transparent Barrier Substrate 2

A transparent barrier substrate (IBOPP) 2 was produced in the same manner as the transparent barrier substrate 1 described above except that a biaxially stretched polypropylene film with a propylene-ethylene random copolymer content of 100% by mass was used as the second surface resin layer in place of the biaxially stretched polypropylene film (ME-1, manufactured by Mitsui Chemicals Tohcello, Inc.) with a thickness of 20 μm.

- Transparent Barrier Substrate 3

A transparent barrier substrate (IBOPP) 3 was produced in the same manner as the transparent barrier substrate 1 described above except that a biaxially stretched polypropylene film with a propylene homopolymer content of 50% by mass and a propylene-ethylene-butene random copolymer content of 50% by mass was used as the second surface resin layer in place of the biaxially stretched polypropylene film (ME-1, manufactured by Mitsui Chemicals Tohcello, Inc.) with a thickness of 20 μm.

- Transparent Barrier Substrate 4

A transparent barrier substrate (IBOPP) 4 was produced in the same manner as the transparent barrier substrate 1 described above except that a biaxially stretched polypropylene film with a propylene homopolymer content of 70% by mass and a propylene-ethylene-butene random copolymer content of 30% by mass was used as the second surface resin layer in place of the biaxially stretched polypropylene film (ME-1, manufactured by Mitsui Chemicals Tohcello, Inc.) with a thickness of 20 μm.

- Transparent Barrier Substrate 5

A transparent barrier substrate (IBOPP) 5 was produced in the same manner as the transparent barrier substrate 1 described above except that a biaxially stretched polypropylene film without the second surface resin layer was used in place of the biaxially stretched polypropylene film (ME-1, manufactured by Mitsui Chemicals Tohcello, Inc.) with a thickness of 20 μm.

[Adhesive Agent]

A two-component adhesive composed of the following main agent and curing agent was used.

- Adhesive agent A

Main agent: polyester polymer (Mw: 4,000)

Curing agent: a mixture of HDI and XDI

Mole ratio of main agent to curing agent (NCO/OH): 2

The adhesive agent A contains substantially no solvent.

- Adhesive agent B

Main agent: polyester polyurethane polymer (Mw: 30,000)

Curing agent: a mixture of an isophorone diisocyanate (IPDI) trimer and a trimethylolpropane (TMP) adduct of xylylene diisocyanate (XDI)

Mole ratio of main agent to curing agent (NCO/OH): 4

The adhesive agent B contains a solvent.

- Adhesive agent C

Main agent: polyester polymer (Mw: 30,000)

Curing agent: a mixture of a biuret of hexamethylene diisocyanate (HDI) and a nurate of HDI

Mole ratio of main agent to curing agent (NCO/OH): 2

The adhesive agent C contains substantially no solvent.

- Adhesive agent D

Main agent: polyester polymer (Mw: 3,500)

Curing agent: a mixture of IPDI and HDI (the HDI content is higher than the IPDI content)

Mole ratio of main agent to curing agent (NCO/OH): 2

The adhesive agent D contains substantially no solvent.

[Unstretched Polypropylene Film]

The following were used as unstretched polypropylene substrates (hereinafter referred to as "CPPs").

- CPP film 1

An unstretched polypropylene film (composite modulus of elasticity: 691.1 MPa) with a corona-treated surface and with a thickness of 60 μm

- CPP film 2

An unstretched polypropylene film (composite modulus of elasticity: 902.2 MPa) with a corona-treated surface and with a thickness of 60 μm

[Example 1]

A biaxially stretched polypropylene film (P2171, manufactured by Toyobo Co., Ltd., hereinafter also referred to as an "OPP film") with a corona-treated surface and with a thickness of 20 μm was prepared as a first substrate. The transparent barrier substrate 1 was prepared as a second substrate. The CPP film 1 was prepared as a sealant layer.
A print layer with a coating thickness of 1 μm (dry) was formed by a gravure roll coating method on the corona-treated surface of the OPP film serving as the first substrate. The adhesive agent A was applied as a first adhesive layer to the print layer by the gravure roll coating method, and the adhesive layer surface formed on the first substrate and the barrier coating layer surface of the transparent barrier substrate were bonded together and were aged at 40°C for 72 hours. Furthermore, the surface of the second surface resin layer of the transparent barrier substrate 1 was subjected to a corona treatment, the adhesive agent A was applied as a second adhesive layer by the gravure roll coating method, and the adhesive layer surface formed on the second surface resin layer of the transparent barrier substrate 1 and the corona-treated surface of the CPP film 1 were bonded together and were aged at 40°C for 72 hours. Each adhesive layer formed had a thickness of 2.0 μm.
Thus, a laminate was produced. The laminate has a layer configuration of OPP film (20 μm)/print layer (1 μm)/adhesive layer (2.0 μm)/transparent barrier substrate 1 (21 μm)/adhesive layer (2.0 μm)/CPP film 1 (60 μm). Each value in parentheses indicates the thickness of the corresponding layer.
The propylene-ethylene-butene random copolymer content of the second surface resin layer constituting the transparent barrier substrate was 100% by mass.

[Examples 2 to 4]

A laminate was produced in the same manner as in Example 1 except that the type of adhesive agent and/or the thickness of the second adhesive layer were changed as shown in Table 1. The thickness of the first adhesive layer was changed in the same manner as the thickness of the second adhesive layer.

[Examples 5 and 6]

A laminate was produced in the same manner as in Example 1 except that the type of the transparent barrier substrate as the second substrate was changed as shown in Table 1.

[Example 7]

A laminate with a two-layer structure was produced in the same manner as in Example 1 except that the first substrate and the first adhesive resin layer were not used.

[Comparative Example 1]

A laminate was produced in the same manner as in Example 1 except that the type of the transparent barrier substrate as the second substrate was changed as shown in Table 1.

[Comparative Examples 2 and 3]

A laminate was produced in the same manner as in Example 1 except that the type of adhesive agent and/or the thickness of the second adhesive layer were changed as shown in Table 1. The thickness of the first adhesive layer was changed in the same manner as the thickness of the second adhesive layer.

[Comparative Examples 4 and 5]

A laminate was produced in the same manner as in Example 1 except that the type of adhesive agent was changed as shown in Table 1.

[Comparative Example 6]

A laminate was produced in the same manner as in Example 1 except that the unstretched polypropylene film as the sealant layer was changed to the CPP film 2.

[Comparative Example 7]

A laminate was produced in the same manner as in Example 1 except that the type of the transparent barrier substrate as the second substrate was changed as shown in Table 1.

[Measurement of Modulus of Elasticity]

(Modulus of Elasticity of Adhesive Layer)

For the laminates produced in the above examples, force curve measurement was performed with an atomic force microscope (AFM) to determine the modulus of elasticity of a cross section of the adhesive layer from the resulting force curve.

A specific measurement procedure is as described below.

A block in which the laminate produced in each example described above was embedded in an embedding resin was prepared and was cut with a commercially available rotary microtome in a room temperature (25°C) environment to prepare a cross section of the laminate. The cross section is prepared by cutting in the thickness direction perpendicular to the main surface of the laminate. Finishing was performed with a diamond knife.

Using an atomic force microscope (AFM), mapping measurement was performed on a 2.5-$\mu$m square including a cross section of the adhesive layer with respect to the cross section. In the cross section of the adhesive layer, 20 force curves with which an appropriate force curve shape was obtained were selected. The modulus of elasticity was calculated by fitting each force curve according to the Johnson-Kendall-Roberts (JKR) theory to calculate the arithmetic mean of 20 elastic moduli (hereinafter also referred to as a "first arithmetic mean"). The force curve was selected near the central portion of the adhesive layer in the thickness direction in a portion where the cross section of the adhesive layer was exposed. Three elastic moduli close to the first arithmetic mean were selected from the 20 elastic moduli to calculate the arithmetic mean of the three elastic moduli (hereinafter also referred to as a "second arithmetic mean"). The second arithmetic mean was defined as the modulus of elasticity of the cross section of the adhesive layer.

Details of the measurement conditions for the AFM are described below.

(Measurement of Modulus of Elasticity using AFM)

- Apparatus name: SPM-9700HT (manufactured by Shimadzu Corporation)

- Measurement atmosphere: in the atmosphere, at room temperature (25°C)

- Measurement mode: contact mode

- Calibration method: measuring cantilever sensitivity using glass

- Number of measurement points: 64 x 64 points (4096 points in total)

- Viewing angle range: 2.5-$\mu$m square

- Cantilever type: CONTR (manufactured by NanoWorld)

- Tip radius of cantilever: < 8 nm

- Spring constant of cantilever: 0.2 N/m

- Contact pressure: 0.5 V

- Scanning speed: 3 Hz

- Elastic modulus calculation model: Johnson-Kendall-Roberts (JKR) theory

- Poisson's ratio of sample: 0.4

- Analysis software: Nano 3D Mapping (manufactured by Shimadzu Corporation)

(Composite Modulus of Elasticity of Sealant Layer)

The composite modulus of elasticity ($E_r$) of the sealant layer was determined based on the nanoindentation method using a nanoindenter ("TI950 TriboIndenter" manufactured by Bruker AXS K.K.) using a cross section of the sealant layer as a measurement surface. A Berkovich indenter (triangular pyramid indenter; Berkovich_TI0039) was used as an indenter of the nanoindenter in the measurement. The measurement was performed at five or more points on the same cross section, and the composite modulus of elasticity $E_r$ was defined as an arithmetic mean of values measured at five points with high reproducibility. The number of data points was 200 points/sec.

A load control method (indentation load: 30 $\mu$N, loading for 3 seconds/holding for 5 seconds/unloading for 3 seconds) was adopted as the measurement conditions, and the measurement conditions are more specifically as described below. The indenter was pressed into the sealant layer from the cross section of the sealant layer to an indentation load of 30 $\mu$N over 3 seconds, and this state was held for 5 seconds. This was followed by unloading for 3 seconds. Thus, the maximum load $P_{max}$, the projected contact area $A_p$ at the maximum depth, and a load-displacement curve could be obtained, and the composite modulus of elasticity was calculated from the load-displacement curve. The measurement was performed in a room temperature (23°C) environment. The portion into which the indenter was pressed was near the central portion of the sealant layer in the thickness direction in the portion where the cross section of the sealant layer was exposed. The cross section is prepared by cutting in the thickness direction perpendicular to the main surface of the laminate. The cross section can be prepared by preparing a block in which the laminate was embedded in an embedding resin and cutting the block with a commercially available rotary microtome in a room temperature (23°C) environment. Finishing was performed with a diamond knife.

[Laminate Strength]

Bag-like pouches were produced by folding the laminates produced in the above examples into a V-shape with the sealant film side on the inside and heat-sealing the laminates to a width of 130 mm and a height of 165 mm. Each pouch was filled with 100 mL of water from the opening, and the opening was hermetically heat-sealed. The sealed pouch was subjected to a retort sterilization treatment of a hot water type at a retort temperature of 121°C for a retort time of 30 minutes.

The laminate after the retort sterilization treatment was cut into a strip with a width of 15 mm extending in the MD direction of the film to prepare a test specimen. The laminate strength (N/15 mm) of the test specimen was measured with a tensile tester (Tensilon universal testing machine, manufactured by Orientec Co., Ltd.) in accordance with JIS Z 1707: 2019 at a temperature of 20°C and a relative humidity of 65% and at a peel rate of 50 mm/min by 90-degree peeling (a T-peel method).

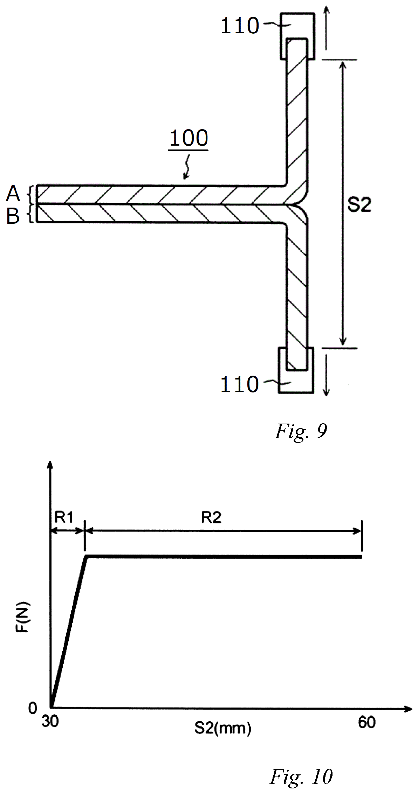

More specifically, first, the laminate was cut out to prepare a strip-like test specimen 100 in which the sealant layer side B and the substrate side A were peeled by 15 mm in advance in the longitudinal direction. Subsequently, as illustrated in Fig. 9, the peeled portions of the sealant layer side B and the substrate side A were each gripped by a clamp 110 of the measuring apparatus. The clamps 110 were pulled at a rate of 50 mm/min in opposite directions perpendicular to the plane direction of the portion where the sealant layer side B and the substrate side A were still laminated, thereby measuring the average value of the tensile stress F in the stable region (see Fig. 10). The distance S2 between the clamps 110 at the start of the pulling was 30 mm, and the distance S2 between the clamps 110 at the end of the pulling was 60 mm. Fig. 10 is a schematic view showing a change in the tensile stress F with respect to the distance S2 between the clamps 110. As illustrated in Fig. 10, the change in the tensile stress F with respect to the distance S2 enters a second region $R^2$ with a smaller change rate than a first region $R^1$ via the first region $R^1$. The second region $R^2$ is also referred to as a stable region. For five test specimens 100, the average value of the tensile stress F in the stable region $R^2$ was measured and was defined as the laminate strength.

[Evaluation of Seal Strength]

Bag-like pouches were produced by folding the laminates produced in the above examples into a V-shape with the sealant film side on the inside and heat-sealing the laminates to a width of 130 mm and a height of 165 mm. Each pouch was filled with 100 mL of water from the opening, and the opening was hermetically heat-sealed. The sealed pouch was subjected to a retort sterilization treatment of a hot water type at a retort temperature of 121°C for a retort time of 30 minutes.

A test specimen with a width of 15 mm was cut out perpendicular to the seal portion of each laminate after the retort sterilization treatment and was mounted on a tensile tester (Strograph VG1F, manufactured by Toyo Seiki Seisaku-sho, Ltd.) with its two ends gripped to measure the seal strength of the laminate.

<Measurement Conditions>

- Tensile test speed: 300 mm/min

- Distance between clamps: 25 mm

[Evaluation of Impact Resistance]

Ten bag-like pouches were produced by folding each laminate produced above into a V-shape with the sealant film side on the inside and heat-sealing the laminate to a width of 130 mm and a height of 165 mm. Each pouch was filled with 150 mL of water from the opening, and the opening was hermetically heat-sealed. The sealed pouch was dropped 10 times horizontally from the height of 80 cm (so that the trunk portion of the pouch hit the floor) and was then dropped 10 times vertically from the height of 80 cm (so that the bottom portion of the pouch hit the floor), and the impact resistance was evaluated by examining how many of the 10 pouches were broken. Tables 1 and 2 show the results.

<Evaluation Criteria>

A: No package rupture

B: Although there is no package rupture, retraction of the seal position is observed

C: One or more packages are broken

[Table 1]

| Layer configuration | | Example 1 | Example 2 | Example 3 | Example 4 | Example 5 | Example 6 | Example 7 |
|---|---|---|---|---|---|---|---|---|
| First substrate layer | Type | OPP | OPP | OPP | OPP | OPP | OPP | - |
| | Thickness (um) | 20 | 20 | 20 | 20 | 20 | 20 | - |
| First adhesive layer | Type | A | A | B | B | A | A | - |
| | Thickness (um) | 2 | 2 | 4 | 4 | 2 | 2 | - |

(continued)

| Layer configuration | | | Example 1 | Example 2 | Example 3 | Example 4 | Example 5 | Example 6 | Example 7 |
|---|---|---|---|---|---|---|---|---|---|
| Second substrate layer | | Type | IBOPP1 | IBOPP1 | IBOPP1 | IBOPP1 | IBOPP2 | IBOPP3 | IBOPP1 |
| | | Thickness (um) | 21 | 21 | 21 | 21 | 21 | 21 | 21 |
| | | Second surface resin layer | PP-PE-PB | PP-PE-PB | PP-PE-PB | PP-PE-PB | PP-PE | Homo PP50% + PP-PE-PB50% | PP-PE-PB |
| Second adhesive layer | | Type | A | A | B | B | A | A | A |
| | | Thickness (um) | 2 | 1 | 4 | 4.5 | 2 | 2 | 2 |
| | | Modulus of elasticity (Mpa) | 35.3 | 35.3 | 20 | 20 | 35.3 | 35.3 | 35.3 |
| Sealant layer | | Type | CPP1 | CPP1 | CPP1 | CPP1 | CPP1 | CPP1 | CPP1 |
| | | Thickness (um) | 60$\mu$m | 60$\mu$m | 60$\mu$m | 60$\mu$m | 60$\mu$m | 60$\mu$m | 60$\mu$m |
| | | Composite modulus of elasticity (Mpa) | 691.1 | 691.1 | 691.1 | 691.1 | 691.1 | 691.1 | 691.1 |
| Laminate strength between second substrate and sealant (after retort) [N/15mm] | | | 2.6 | 2.0 | 2.8 | 4.0 | 2.2 | 2.1 | 3.9 |
| Seal strength (after retort) [N/15mm] | | | 53 | 48.0 | 66 | 68 | 50 | 51.0 | 50.0 |
| Drop impact resistance | | | A | B | A | A | A | A | A |

[Table 2]

| Layer configuration | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| First substrate layer | Type | OPP | OPP | OPP | OPP | OPP | OPP | OPP |
| | Thickness (um) | 20 | 20 | 20 | 20 | 20 | 20 | 20 |
| First adhesive layer | Type | A | A | B | C | D | A | A |
| | Thickness (um) | 2 | 2 | 4 | 2 | 2 | 2 | 2 |
| Second substrate layer | Type | IBOPP5 | IBOPP1 | IBOPP1 | IBOPP1 | IBOPP1 | IBOPP1 | IBOPP4 |
| | Thickness (um) | 21 | 21 | 21 | 21 | 21 | 21 | 21 |
| | Second surface resin layer | - | PP-PE-PB | PP-PE-PB | PP-PE-PB | PP-PE-PB | PP-PE-PB | Homo PP70% + PP-PE-PB30% |
| Second adhesive layer | Type | A | A | A | C | D | A | A |
| | Thickness (um) | 2 | 0.5 | 5 | 2 | 2 | 2 | 2 |
| | Modulus of elasticity (Mpa) | 35.3 | 35.3 | 20 | 15.2 | 58.6 | 35.3 | 35.3 |
| Sealant layer | Type | CPP1 | CPP1 | CPP1 | CPP1 | CPP1 | CPP2 | CPP1 |
| | Thickness (um) | 60$\mu$m | 60$\mu$m | 60$\mu$m | 60$\mu$m | 60$\mu$m | 60$\mu$m | 60$\mu$m |
| | Composite modulus of elasticity (Mpa) | 691.1 | 691.1 | 691.1 | 691.1 | 691.1 | 902.2 | 691.1 |
| Laminate strength between second substrate and sealant (after retort) [N/15mm] | | 1.6 | 0.7 | (Winding Misalignment) | 1.4 | 1.2 | 2.8 | 1.8 |
| Seal strength (after retort) [N/15mm] | | 35 | 18 | (Winding Misalignment) | 33 | 32 | 56 | 38 |
| Drop impact resistance | | C | C | - | C | C | C | C |

Reference Signs List

1: laminate, 10: polypropylene stretched substrate, 20: barrier substrate, 22: polypropylene stretched substrate, 22a: polypropylene layer, 22b: first surface resin layer, 22c: second surface resin layer, 23: surface coating layer, 24: inorganic oxide layer, 25: covering layer, 30: sealant layer, 40, 40A, 40B: adhesive layer,

50: packaging bag, 51: easy-to-open portion, 52: notch portion, 53: half-cut line,

60: standing pouch, 61: trunk portion (side sheet), 62: bottom portion (bottom sheet), 63: venting mechanism, 63a: venting seal portion, 63b: unsealed portion,

100: test specimen, 110: clamp

## Claims

1. A laminate comprising: a second substrate; a second adhesive layer; and a sealant layer in this order in a thickness direction,

   wherein the laminate includes only one substrate,
   the second substrate has a multilayer structure including a first surface resin layer, a polypropylene layer, and a second surface resin layer in this order in a thickness direction and is disposed such that the second surface resin layer faces the second adhesive layer,
   the second surface resin layer contains a random copolymer of propylene and an $\alpha$-olefin other than propylene in an amount of 50% by mass or more based on a total amount of the second surface resin layer,
   the second adhesive layer has a thickness of 1 $\mu$m or more and 4.5 $\mu$m or less and a modulus of elasticity of 20 MPa or more and 50 MPa or less, and
   the sealant layer is an unstretched polypropylene film and has a composite modulus of elasticity of 900 MPa or less.

2. A laminate comprising: a first substrate; a first adhesive layer; a second substrate; a second adhesive layer; and a sealant layer in this order in a thickness direction,

   wherein the first substrate is a polypropylene stretched substrate,
   the second substrate has a multilayer structure including a first surface resin layer, a polypropylene layer, and a second surface resin layer in this order in a thickness direction and is disposed such that the first surface resin layer faces the first adhesive layer and the second surface resin layer faces the second adhesive layer,
   the second surface resin layer contains a random copolymer of propylene and an $\alpha$-olefin other than propylene in an amount of 50% by mass or more based on a total amount of the second surface resin layer,
   the second adhesive layer has a thickness of 1 $\mu$m or more and 4.5 $\mu$m or less and a modulus of elasticity of 20 MPa or more and 50 MPa or less, and
   the sealant layer is an unstretched polypropylene film and has a composite modulus of elasticity of 900 MPa or less.

3. The laminate according to claim 1 or 2, comprising at least one of a propylene-ethylene random copolymer and a propylene-ethylene-butene random copolymer as the random copolymer.

4. The laminate according to claim 1 or 2, wherein the polypropylene layer has a propylene homopolymer content of more than 50% by mass.

5. The laminate according to claim 1 or 2, wherein the first surface resin layer has the same configuration as the second surface resin layer.

6. The laminate according to claim 1 or 2, wherein the laminate comprises one or more barrier layers.

7. The laminate according to claim 1 or 2, wherein a polypropylene content relative to a total resin material content of the laminate is 80% by mass or more.

8.  The laminate according to claim 1 or 2, which is a packaging material.

9.  A packaging bag comprising the laminate according to claim 8.

10. The packaging bag according to claim 9, which is a pouch for storing a heat-sterilized food.

11. A heat-sterilized pouch comprising:

   a packaging bag according to claim 10; and
   a heat-sterilized food stored in the packaging bag.

*Fig. 1*

*Fig. 2*

Fig. 3

Fig. 4

*Fig. 5*

*Fig. 6*

*Fig. 7*

*Fig. 8*

*Fig. 9*

*Fig. 10*

**EP 4 751 912 A1**

## INTERNATIONAL SEARCH REPORT

| International application No. |
|---|
| **PCT/JP2024/034543** |

| | | |
|---|---|---|
| **A.** | **CLASSIFICATION OF SUBJECT MATTER** | |

*B32B 27/32*(2006.01)i; *B32B 27/00*(2006.01)i; *B65D 65/40*(2006.01)i; *C08J 7/043*(2020.01)i
FI:  B32B27/32 E; B32B27/00 D; B32B27/00 H; B32B27/32 103; B65D65/40 D; C08J7/043 A CES

According to International Patent Classification (IPC) or to both national classification and IPC

| | |
|---|---|
| **B.** | **FIELDS SEARCHED** |

Minimum documentation searched (classification system followed by classification symbols)

B32B1/00-43/00;C09J1/00-201/10;B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | WO 2023/095915 A1 (TOPPAN PRINTING CO., LTD.) 01 June 2023 (2023-06-01) claims, paragraphs [0045], [0103]-[0105], [0108], examples, fig. 3, 4 | 1-11 |
| A | JP 2004-17615 A (DAICEL CHEM. IND. LTD.) 22 January 2004 (2004-01-22) claims, paragraphs [0054], [0058], examples | 1-11 |
| P, A | JP 2024-094345 A (TOPPAN HOLDINGS INC.) 09 July 2024 (2024-07-09) examples 5, 6, paragraph [0208] | 1-11 |
| P, A | JP 2023-173876 A (DAI NIPPON PRINTING CO., LTD.) 07 December 2023 (2023-12-07) claims, examples, paragraph [0231] | 1-11 |

☐ Further documents are listed in the continuation of Box C.     ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 November 2024** | **17 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**40**

**INTERNATIONAL SEARCH REPORT**
Information on patent family members

International application No.

**PCT/JP2024/034543**

| Patent document cited in search report | | | Publication date (day/month/year) | Patent family member(s) | | | Publication date (day/month/year) |
|---|---|---|---|---|---|---|---|
| WO | 2023/095915 | A1 | 01 June 2023 | EP | 4424510 | A1 | |
| | | | | claims, paragraphs [0045], [0105]-[0107], [0110], examples, fig. 3, 4 | | | |
| | | | | CN | 118265610 | A | |
| JP | 2004-17615 | A | 22 January 2004 | (Family: none) | | | |
| JP | 2024-094345 | A | 09 July 2024 | (Family: none) | | | |
| JP | 2023-173876 | A | 07 December 2023 | (Family: none) | | | |

Form PCT/ISA/210 (patent family annex) (July 2022)

**REFERENCES CITED IN THE DESCRIPTION**

**Patent documents cited in the description**

- JP 2023166474 A
- JP 2023167754 A
- JP 2021020391 A